(19) Europäisches Patentamt
European Patent Office
Office européen des brevets

(11) EP 4 772 558 A1

(12) EUROPEAN PATENT APPLICATION

(43) Date of publication:
**08.07.2026 Bulletin 2026/28**

(21) Application number: **26150206.6**

(22) Date of filing: **05.01.2026**

(51) International Patent Classification (IPC):
***C08G 61/12*** (2006.01) ***C07D 519/00*** (2006.01)
***C08L 65/00*** (2006.01) ***C09K 11/06*** (2006.01)
***H10K 30/00*** (2023.01)

(52) Cooperative Patent Classification (CPC):
**C08G 61/12; C07D 519/00; C08L 65/00;**
C08G 2261/124; C08G 2261/1412; C08G 2261/143; C08G 2261/312; C08G 2261/3142; C08G 2261/332; C08G 2261/42; C08G 2261/516; C08G 2261/90

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **07.01.2025 KR 20250002431**

(71) Applicant: **SK Innovation Co., Ltd.**
**Seoul 03188 (KR)**

(72) Inventors:
- **KIM, Jong Chan**
  **34124 Daejeon (KR)**
- **LEE, Dong Gun**
  **34124 Daejeon (KR)**
- **LEE, So Young**
  **34124 Daejeon (KR)**
- **CHO, Soo Min**
  **34124 Daejeon (KR)**
- **KIM, Cheol Woo**
  **34124 Daejeon (KR)**
- **LEE, Jung A**
  **34124 Daejeon (KR)**

(74) Representative: **Prüfer & Partner mbB**
**Patentanwälte · Rechtsanwälte**
**Sohnckestraße 12**
**81479 München (DE)**

# (54) COPOLYMER FOR ANION EXCHANGE MEMBRANE AND ANION EXCHANGE MEMBRANE INCLUDING THE SAME, AND USE THEREOF

(57) A copolymer for an anion exchange membrane including a repeating unit represented by Formula 1 below and an anion exchange membrane including the copolymer are provided.

[Formula 1]

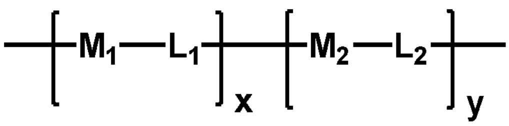

in Formula 1, $M_1$, $M_2$, $L_1$, $L_2$, x and y refer to the definitions as defined herein.

EP 4 772 558 A1

## Description

[BACKGROUND OF THE INVENTION]

1. Field of the Invention

The disclosure of the present application relates to a copolymer for an anion exchange membrane and an anion exchange membrane including the copolymer as well as a use of said anion exchange membrane.

2. Description of the Related Art

An electrolyte membrane refers to a membrane having ionic conductivity and selectively transporting ions during an electrochemical reaction. The electrolyte membrane is used in fields such as fuel cells and water electrolysis devices.

Among electrolyte membranes, an anion exchange membrane selectively transports anions and is used in fields such as fuel cells or electrochemical reduction of carbon dioxide. These devices often operate under elevated temperature and/or pressure conditions, so that improved thermal and mechanical properties of the anion exchange membrane may be required.

Research and development have been conducted to improve the physical properties of the anion exchange membrane, such as stability, durability, and ionic conductivity.

[SUMMARY OF THE INVENTION]

An object of the present disclosure is to provide a copolymer for an anion exchange membrane having improved chemical stability and ionic conductivity.

Another object of the present disclosure is to provide an anion exchange membrane having improved ionic conductivity, mechanical properties, and reliability.

A copolymer for an anion exchange membrane according to a general aspect of the present disclosure includes a repeating unit represented by Formula 1 below:

[Formula 1]

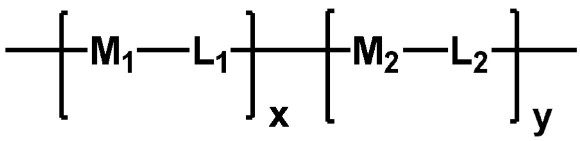

In Formula 1, $M_1$ is selected from the arylene groups represented by any one of Formulae 2-1 and 2-2 below, $M_2$ is an arylene group represented by Formula 3 below, x and y are each independently 0.1 to 0.9 and x + y = 1, and $L_1$ and $L_2$ are each independently selected from the arylene groups represented by Formulae 4-1 and 4-2 below.

[Formula 2-1]

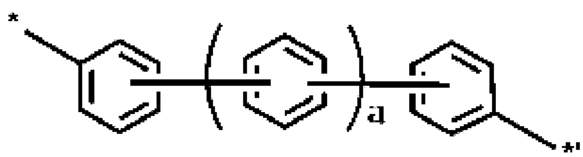

[Formula 2-2]

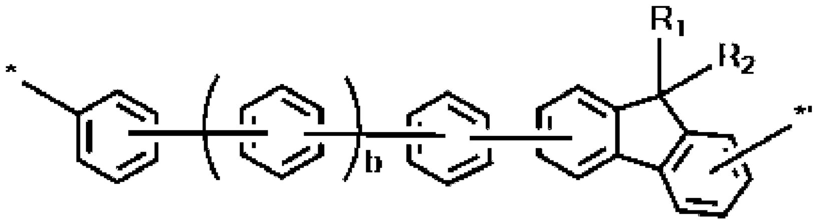

[Formula 3]

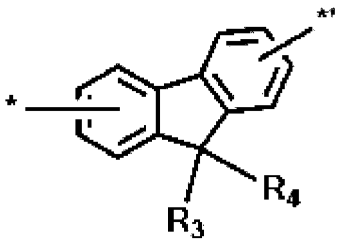

[Formula 4-1] [Formula 4-2]

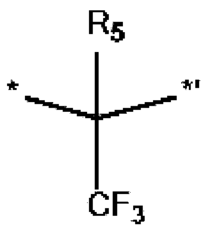

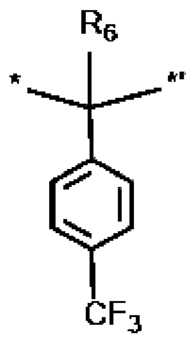

In Formulae 2-1, 2-2, 3, 4-1, and 4-2, a is an integer of 2 to 6, b is an integer of 0 to 4, $R_1$ and $R_2$ are each independently a $C_1$-$C_{10}$ alkyl group, $R_3$ and $R_4$ are each independently a $C_3$-$C_{10}$ alkyl group having a quaternary ammonium salt at a terminal, $R_5$ and $R_6$ are each independently selected from -H and a $C_1$-$C_3$ alkyl group, and -* and -*' represent crosslinked bonding sites.

In some embodiments, in Formula 2-1, a may be an integer of 2 to 5, and in Formula 2-2, b may be an integer of 0 to 3.

In some embodiments, the divalent phenylene groups in Formulae 2-1 and 2-2 may each independently be bonded at a meta- or a para-position.

In some embodiments, the counterion of the quaternary ammonium salt may be a halide anion, $OH^-$, $HCO_3^-$, or a mixture thereof. Preferably, the counterion of the quaternary ammonium salt includes one or more of $F^-$, $Cl^-$, $Br^-$, and $I^-$.

In some embodiments, $M_1$ may be selected from the arylene groups represented by any one of Formulae 2-1A to 2-1E below:

[Formula 2-1A] [Formula 2-1B]

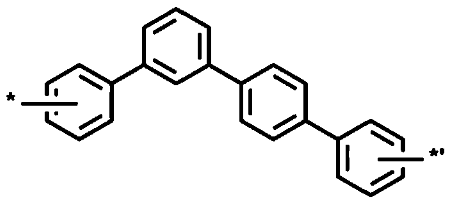

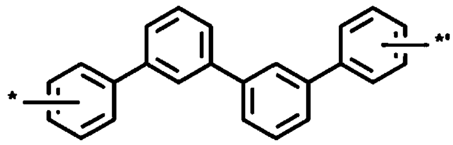

[Formula 2-1C] [Formula 2-1D]

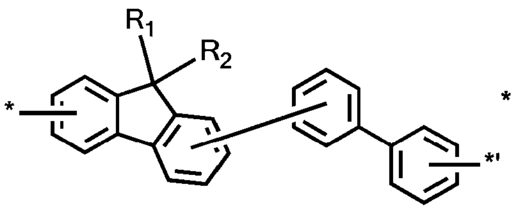

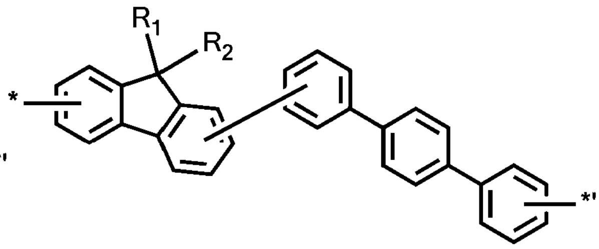

[Formula 2-1E]

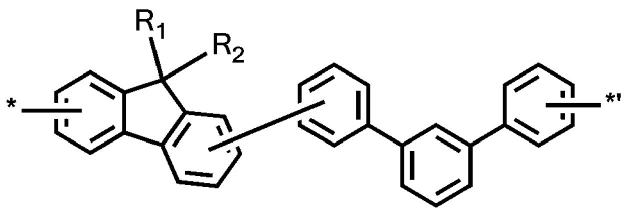

In Formulae 2-1A to 2-1E, $R_1$ and $R_2$ are each independently a $C_1$-$C_{10}$ alkyl group, and -* and -*' represent crosslinked bonding sites.

In some embodiments, in Formulae 2-1C to 2-1E, the arylene group derived from fluorene may be bonded at the meta-position with respect to the adjacent phenylene group.

In some embodiments, $R_1$ and $R_2$ may each independently be a $C_1$-$C_5$ alkyl group.

In some embodiments, $R_3$ and $R_4$ may each independently be a $C_4$-$C_7$ alkyl group having a halide quaternary ammonium salt at a terminal.

In some embodiments, the quaternary ammonium salt may be selected from the group represented by Formulae 5-1 to 5-3 below:

[Formula 5-1] [Formula 5-2] [Formula 5-3]

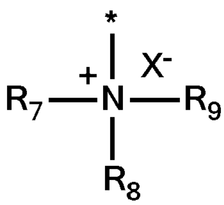

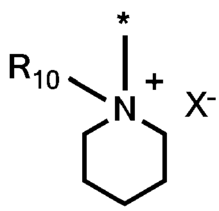

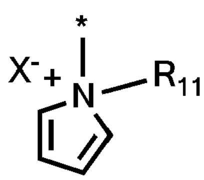

In Formulae 5-1 to 5-3, $R_7$ to $R_{11}$ are each independently a $C_1$-$C_5$ alkyl group, each X is independently OH, F, Cl, Br, or I, and -* represents a bonding site bonded to the terminal of $R_3$ or $R_4$.

In some embodiments, the copolymer for an anion exchange membrane may further include a crosslinking unit represented by any one of Formulae 6-1 and 6-2 below:

[Formula 6-1]

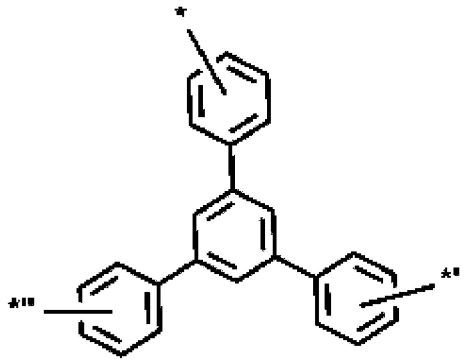

[Formula 6-2]

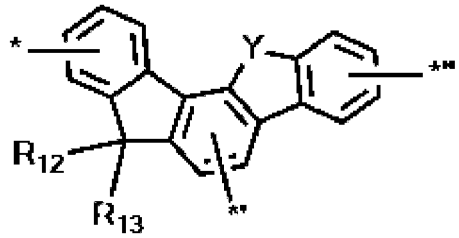

In Formulae 6-1 and 6-2, -*, -*' and -*" represent bonding sites crosslinked with the repeating unit, $R_{12}$ and $R_{13}$ are each independently a $C_1$-$C_5$ alkyl group, and Y is O or S.

In some embodiments, the repeating unit and the crosslinking unit may be directly crosslinked or may be crosslinked through an arylene group represented by any one of Formulae 7-1 and 7-2 below:

[Formula 7-1]

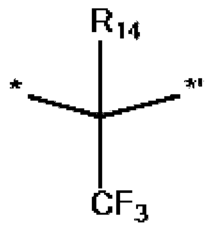

[Formula 7-2]

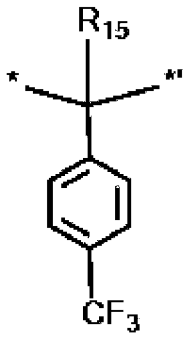

In Formulae 7-1 and 7-2, $R_{14}$ and $R_{15}$ are each independently selected from -H and $C_1$-$C_3$ alkyl groups, and -* and -*' represent crosslinked bonding sites. In some embodiments, the copolymer may include the repeating unit represented by Formula 1 in an amount of 90.0 mol% to 100 mol%, based on the total repeating units included in the copolymer.

In some embodiments, the copolymer for an anion exchange membrane may include the repeating unit represented by Formula 1 in an amount of 80.0 mol% to 99.0 mol%, based on the total repeating units included in the copolymer, and may include the crosslinking unit represented by any one of Formulae 6-1 and 6-2 in an amount of 1.0 mol% to 20.0 mol%, based on the total repeating units included in the copolymer.

In some embodiments, the copolymer for an anion exchange membrane may have a weight average molecular weight of 30,000 g/mol to 2,000,000 g/mol.

In some embodiments, the ionic conductivity reduction rate (R) of the copolymer for the anion exchange membrane, calculated by Equation 1 below, may be 15% or less:

[Equation 1]

$$\text{Ionic conductivity reduction rate (R, \%)} = ((C_1 - C_2) / C_1) \times 100$$

In Equation 1, $C_1$ denotes the ionic conductivity evaluated at room temperature for an anion exchange membrane including the copolymer for an anion exchange membrane, after converting the counterion to $OH^-$, and $C_2$ denotes the ionic conductivity evaluated at room temperature after immersing the anion exchange membrane in the $OH^-$ form in a 1 M alkaline solution, maintaining it at 80°C for 28 days, and then cooling it to room temperature.

An anion exchange membrane according to embodiments of the present disclosure includes the above-described copolymer.

In some embodiments, the anion exchange membrane may have a thickness of 10 μm to 80 μm.

In some embodiments, the $OH^-$ ionic conductivity measured at room temperature for the copolymer for the anion exchange membrane may be 30 mS/cm or more.

The copolymer according to embodiments of the present disclosure may achieve improved chemical stability, physical stability, and ionic conductivity.

The anion exchange membrane according to embodiments of the present disclosure may achieve improved ion-exchange characteristics, high-temperature stability, and operational stability.

The copolymer and anion exchange membrane of the present disclosure may be applied to technical fields such as membrane electrode assemblies, fuel cells including alkaline fuel cells, water electrolysis devices, carbon dioxide conversion devices, and electrochemical hydrogen compression systems.

[DETAILED DESCRIPTION OF THE INVENTION]

Hereinafter, exemplary embodiments of the present disclosure will be described in detail with reference to the accompanying drawing so that those skilled in the art may easily practice the present disclosure.

**<Copolymer for an anion exchange membrane>**

The copolymer for an anion exchange membrane according to embodiments of the present disclosure includes a repeating unit represented by Formula 1 below:

[Formula 1]

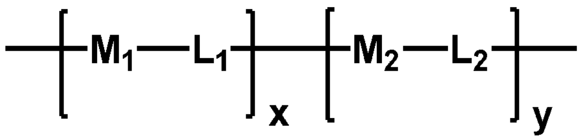

In Formula 1, $M_1$ is selected from the arylene groups represented by any one of Formulae 2-1 and 2-2 below, $M_2$ is an arylene group represented by Formula 3 below, x and y are each independently 0.1 to 0.9 and satisfy x + y = 1, and $L_1$ and $L_2$ are each independently selected from the arylene groups represented by Formulae 4-1 and 4-2 below.

[Formula 2-1]

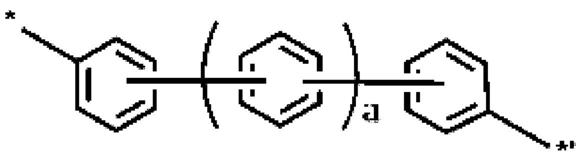

[Formula 2-2]

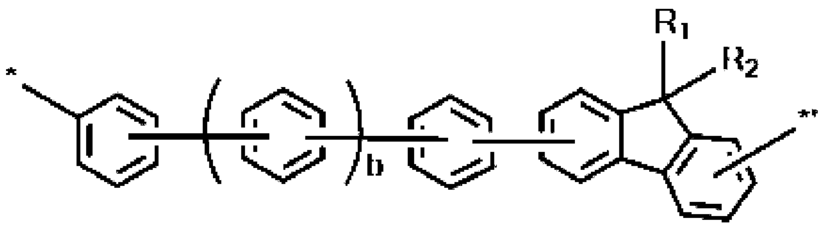

[Formula 3]

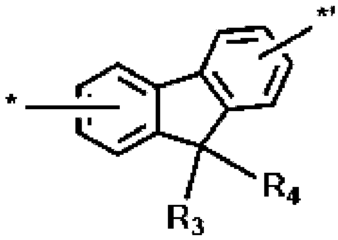

[Formula 4-1] [Formula 4-2]

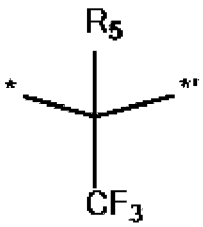

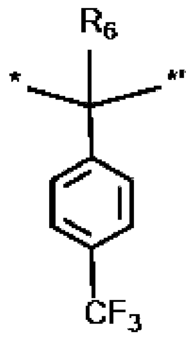

In Formulae 2-1, 2-2, 3, 4-1, and 4-2,
a is an integer of 2 to 6, b is an integer of 0 to 4, and $R_1$ and $R_2$ are each independently a $C_1$-$C_{10}$ alkyl group. The alkyl group may be, for example, a straight-chain alkyl group.

$R_3$ and $R_4$ are each independently a $C_3$-$C_{10}$ alkyl group having a quaternary ammonium salt at a terminal. The alkyl group may be, for example, a straight-chain alkyl group.

$R_5$ and $R_6$ are each independently selected from -H and a $C_1$-$C_3$ alkyl group.

-* and -*' represent crosslinked bonding sites.

Accordingly, the ionic conductivity, chemical stability, and physical stability of the copolymer for an anion exchange membrane may be improved. An anion exchange membrane including the copolymer for an anion exchange membrane may achieve improved ion-exchange characteristics, high-temperature stability, and operational stability.

In some embodiments, the copolymer may be a random copolymer or a block copolymer, for example, a random copolymer.

In some embodiments, in Formula 2-1, the "a" may be an integer of 2 to 5, and in Formula 2-2, the "b" may be an integer of 0 to 3. For example, the a may be 2 or 3, and the b may be 0 or 1.

In some embodiments, the divalent phenylene groups in Formulae 2-1 and 2-2 may each independently be bonded at the meta- or para-position.

In some embodiments, the counterion of the quaternary ammonium salt may be a halide anion, $OH^-$, or $HCO_3^-$. The halide anion may be selected from $F^-$, $Cl^-$, $Br^-$, and $I^-$.

In some embodiments, $M_1$ may be selected from the arylene groups represented by any one of Formulae 2-1A to 2-1E below:

[Formula 2-1A] [Formula 2-1B]

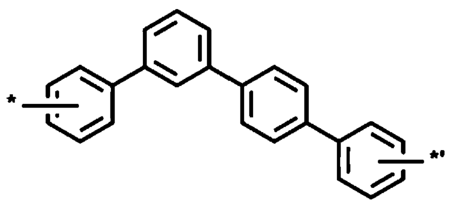

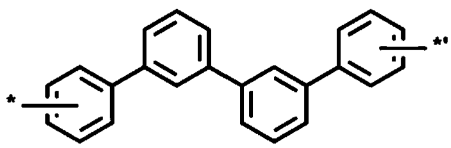

[Formula 2-1C]

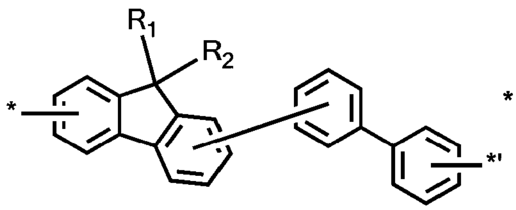

[Formula 2-1D]

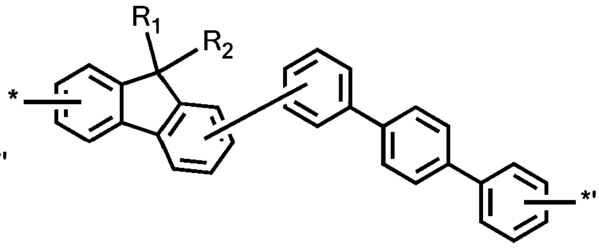

[Formula 2-1E]

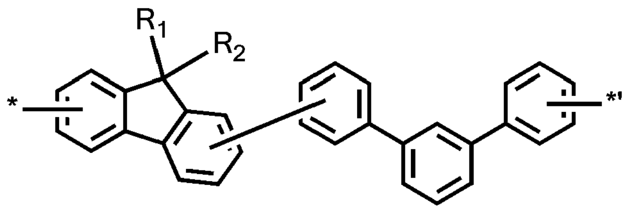

In Formulae 2-1A to 2-1E, $R_1$ and $R_2$ are each independently a $C_1$-$C_{10}$ alkyl group, and -* and -*' represent crosslinked bonding sites. The alkyl group may be, for example, a straight-chain alkyl group.

In some embodiments, $R_1$ and $R_2$ may be the same.

$R_1$ and $R_2$ may be, for example, a $C_1$-$C_7$ straight-chain alkyl group.

In some embodiments, in Formulae 2-1C to 2-1E, the arylene group derived from fluorene may be bonded at the meta-position with respect to the adjacent phenylene group.

For example, the arylene group derived from fluorene may be bonded to the adjacent phenylene group at the position indicated by 4 below. For example, the adjacent phenylene group may be bonded to the 1-, 2-, or 3-position of the arylene group derived from fluorene.

[Formula 2-1C]

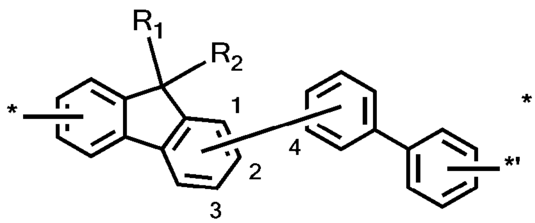

[Formula 2-1D]

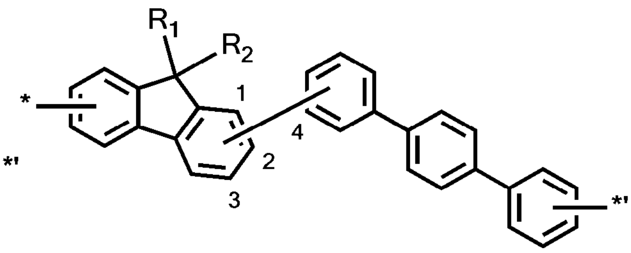

[Formula 2-1E]

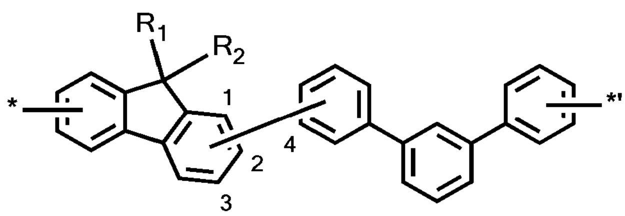

In some embodiments, $R_1$ and $R_2$ may each independently be a $C_1$-$C_5$ alkyl group, for example, a $C_1$-$C_3$ alkyl group.

In some embodiments, $R_3$ and $R_4$ may each independently be a $C_4$-$C_7$ alkyl group having a halide quaternary ammonium salt at a terminal.

In some embodiments, the quaternary ammonium salt may be an alkylammonium salt, or an alicyclic or aromatic

ammonium salt containing one or two nitrogen atoms.

The alicyclic or aromatic ammonium salt may be, for example, an ammonium salt of pyrrolidine, piperidine, pyrrole, pyridine, or imidazole.

In some embodiments, the quaternary ammonium salt may be selected from the group represented by Formulae 5-1 to 5-3 below.

[Formula 5-1] [Formula 5-2] [Formula 5-3]

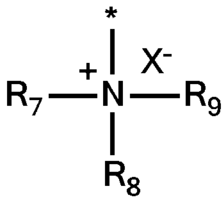

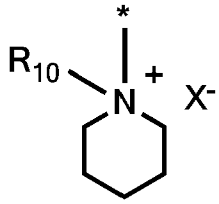

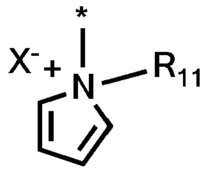

In Formulae 5-1 to 5-3, $R_7$ to $R_{11}$ are each independently a $C_1$-$C_5$ alkyl group, each X is independently OH, F, Cl, Br, or I, and -* represents a bonding site bonded to the terminal of $R_3$ or $R_4$. The alkyl group may be, for example, a straight-chain alkyl group.

In some embodiments, the copolymer for an anion exchange membrane may further include a crosslinking unit represented by any one of Formulae 6-1 and 6-2 below:

[Formula 6-1] [Formula 6-2]

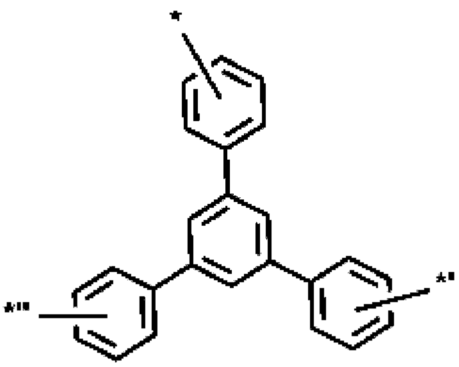

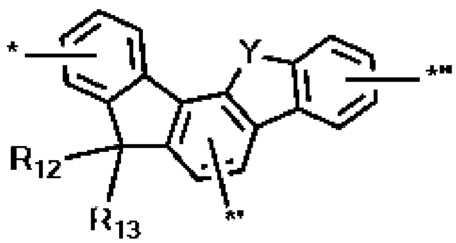

In Formulae 6-1 and 6-2, -*, -*' and -*" represent bonding sites crosslinked with the repeating unit, $R_{12}$ and $R_{13}$ are each independently a $C_1$-$C_5$ alkyl group, and Y is O or S. The alkyl group may be, for example, a straight-chain alkyl group.

The copolymer may be a random copolymer or a block copolymer, for example, a random copolymer.

In some embodiments, the repeating unit and the crosslinking unit may be directly crosslinked or may be crosslinked through an arylene group represented by any one of Formulae 7-1 and 7-2 below.

[Formula 7-1] [Formula 7-2]

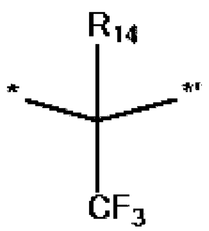

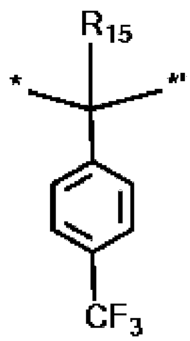

In Formulae 7-1 and 7-2, $R_{14}$ and $R_{15}$ are each independently selected from -H and $C_1$-$C_3$ alkyl groups, and -* and -*' represent crosslinked bonding sites.

In some embodiments, the copolymer for an anion exchange membrane may include the repeating unit represented by Formula 1. For example, the copolymer for an anion exchange membrane may include the repeating unit represented by Formula 1 in an amount of 90.0 mol% to 100 mol%, or 90.0 mol% to 99.9 mol%, based on the total repeating units included in the copolymer.

In some embodiments, the copolymer for an anion exchange membrane may include the repeating unit represented by Formula 1 and the crosslinking unit represented by any one of Formulae 6-1 and 6-2. For example, the copolymer for an anion exchange membrane may include the repeating unit represented by Formula 1 in an amount of 80.0 mol% to 99.0 mol%, 90.0 mol% to 99.0 mol%, or 90.0 mol% to 95.0 mol%, based on the total repeating units included in the copolymer, and may include the crosslinking unit represented by any one of Formulae 6-1 and 6-2 in an amount of 1.0 mol% to 20.0 mol%, 1.0 mol% to 10.0 mol%, or 5.0 mol% to 10.0 mol%. These compositional ranges may lead to an improved high-temperature stability of the anion exchange membrane. Furthermore, by selecting the above compositional ranges, improved processability may be ensured during membrane manufacturing or casting.

In some embodiments, the copolymer for an anion exchange membrane may have a weight average molecular weight of 30,000 g/mol to 2,000,000 g/mol. For example, the weight-average molecular weight (Mw) may be measured by gel permeation chromatography (GPC) in accordance with ISO 16014 or ASTM D5296.

In some embodiments, the reduction rate (R) of the ionic conductivity of the copolymer for an anion exchange membrane, calculated by Equation 1 below, may be 15% or less. Accordingly, the high-temperature stability of the copolymer for an anion exchange membrane may be further improved.

Equation 1

$$\text{Ionic conductivity reduction rate (R, \%)} = ((C_1 - C_2) / C_1) \times 100$$

In Equation 1, $C_1$ denotes the ionic conductivity evaluated at room temperature for an anion exchange membrane including the copolymer for an anion exchange membrane, after converting the counterion to $OH^-$, and $C_2$ denotes the ionic conductivity evaluated at room temperature after immersing the anion exchange membrane in the $OH^-$ form in a 1 M alkaline solution, maintaining it at 80°C for 28 days, and then cooling it to room temperature.

The ionic conductivity may be calculated based on the membrane resistance (Ω) measured by a 4-point probe method using an impedance analyzer (VSP-3e, Biologics) in the frequency range of 0.1 kHz to 1 MHz, for example, by disposing the anion exchange membrane in the OH- form between Pt electrodes.

The alkaline solution may be, for example, a KOH solution, a NaOH solution, or the like.

In some embodiments, the ionic conductivity reduction rate (R) for an anion exchange membrane may be, for example, 10% or less, 7% or less, 5% or less, or 4% or less.

Accordingly, the high-temperature stability of the copolymer for an anion exchange membrane may be further improved.

In a non-limiting example, the copolymer for an anion exchange membrane may be synthesized by a preparation method including, for example, mixing and stirring at least one of first monomers described below and at least one of second monomers described below, and then mixing and stirring the mixture with a third monomer described below. The mixing and stirring may be performed at 0°C under an inert gas atmosphere, such as nitrogen, but is not limited thereto. A solution in which the polymerization reaction of the above-described monomers is completed may be added to, for example, methanol or other alcohols to precipitate a solid, which may then be filtered, washed, and dried to obtain a solid precursor of the copolymer. For example, when mixing the third monomer, an acid such as trifluoromethanesulfonic acid may be mixed together.

The first monomer may include, for example, Monomer a and/or Monomer b below.

<Monomer a>

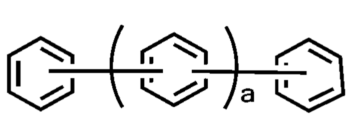

<Monomer b>

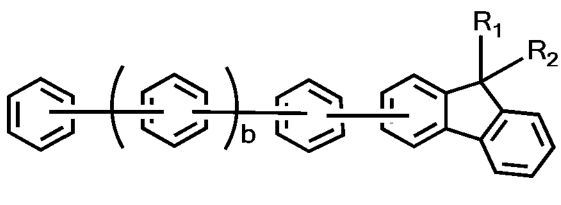

The second monomer may include, for example, Monomer c below.

<Monomer c>

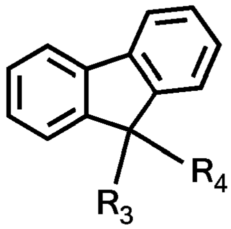

The third monomer may include, for example, Monomers d and/or e below.

<Monomer d> <Monomer e>

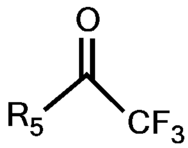

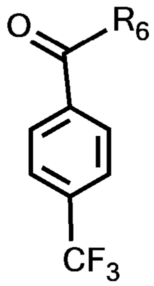

In the first to third monomers, a, b, and $R_1$ to $R_6$ refer to the definitions as defined in Formula 1.
The third monomer may be included as a linker connecting the first and second monomers within the copolymer for an anion exchange membrane.
For example, the copolymer for an anion exchange membrane may be synthesized by dissolving the copolymer precursor in a solvent, slowly adding and stirring a tertiary amine aqueous solution thereto.
For example, a solvent such as diethyl ether may be added to a solution including the copolymer for an anion exchange membrane to precipitate a solid, which may then be filtered, washed, and dried to obtain a solid copolymer precursor.

**<Anion exchange membrane>**

The anion exchange membrane according to exemplary embodiments of the present disclosure includes the above-described copolymer for an anion exchange membrane. Accordingly, the anion exchange membrane may achieve improved ionic conductivity, mechanical properties, high-temperature stability, and reliability.
As a non-limiting example, the anion exchange membrane may be manufactured by dissolving the above-described copolymer for an anion exchange membrane in an organic solvent to obtain a first solution, filtering the first solution to remove impurities to obtain a second solution, casting the second solution on a substrate such as a glass plate, drying, and separating the membrane.
The first solution may be formed at a concentration of, for example, 15 wt% to 35 wt%. The drying may be performed, for example, in a vacuum oven at a temperature of 80°C to 100°C.
In some embodiments, the anion exchange membrane is ion conductive having an $OH^-$ ionic conductivity measured at room temperature of 30 mS/cm or more, and/or wherein the copolymer is included at 80 wt% or more, preferably 90 wt% or more, and more preferably 95 wt%, and even more preferably 99 wt% or more with respect to a weight of a total polymer content of the anion exchange membrane, and/or wherein the anion exchange membrane has a thickness of 10 μm to 80 μm, more preferably of 25 μm to 80 μm and even more preferably of 40 μm to 80 μm in a dry state under ambient conditions at room temperature and room pressure.
In some embodiments, the anion exchange membrane may have a thickness of, for example, 10 μm to 80 μm. Preferably, the anion exchange membrane has a thickness of 25 μm to 80 μm. More preferably, the anion exchange membrane has a thickness of 40 μm to 80 μm. The thickness may be referred to as a thickness in a dry state under ambient conditions (room temperature and room pressure, that is 25°C and 1 bar).
In some embodiments, the $OH^-$ ionic conductivity of the anion exchange membrane measured at room temperature for the copolymer for the anion exchange membrane may be 30 mS/cm or more. Accordingly, the anion

exchange membrane may achieve sufficient ionic conductivity.

In some embodiments, the anion exchange membrane may be ion conductive having an $OH^-$ ionic conductivity measured at room temperature of 30 mS/cm or more. Preferably, the $OH^-$ ionic conductivity of the anion exchange membrane including and/or being composed of the copolymer for the anion exchange membrane described above, is 30 mS/cm or more when measured at room temperature. The copolymer itself may show ion conductive properties and thus may be referred to as an ion conductive copolymer. Accordingly, the anion exchange membrane may achieve sufficient ionic conductivity, that is, may enable efficient ion transport across the polymer structure such as a selective transport of anions while blocking other ions (cations, in particular, and neutral molecules).

For example, the $OH^-$ ionic conductivity of the anion exchange membrane including the above-described copolymer at room temperature may be 40 mS/cm or more, or 50 mS/cm or more, and 100 mS/cm or less.

In some embodiments, wherein the ionic conductivity reduction rate (R), calculated by Equation 1 below, is 15% or less:

[Equation 1]

$$\text{Ionic conductivity reduction rate (R, \%)} = ((C_1 - C_2) / C_1) \times 100$$

in Equation 1, $C_1$ and $C_2$ respectively denote the ionic conductivity of the ion exchange membrane evaluated at room temperature after converting the counterion of the copolymer included in the anion exchange membrane to $OH^-$ and after immersing the anion exchange membrane in the $OH^-$ form in a 1 M alkaline solution, maintaining it at 80°C for 28 days, and then cooling it to room temperature, preferably wherein the alkaline solution is KOH. Reference may be made to the above-described explanation regarding Equation 1.

A fuel cell according to embodiments of the present disclosure includes the above-described anion exchange membrane.

The fuel cell may include: a cathode; an anode disposed opposite the cathode; and the anion exchange membrane disposed between the cathode and the anode.

The fuel cell may be, for example, a solid alkaline fuel cell (SAFC).

A water electrolysis device according to embodiments of the present disclosure includes the above-described anion exchange membrane. The water electrolysis device may include, for example, the anion exchange membrane; and an electrode material disposed on the anion exchange membrane, wherein the electrode material may include, for example, a transition metal, a binder, a porous material, and other components typically included in a state-of-the-art electrolyser.

A carbon dioxide conversion device according to embodiments of the present disclosure includes the above-described anion exchange membrane. The carbon dioxide conversion device may include, for example, a cathode; an anode disposed opposite the cathode; and the anion exchange membrane disposed between the cathode and the anode. When carbon dioxide is supplied to the cathode and a voltage is applied to the carbon dioxide conversion device, carbon dioxide may be reduced according to the following reaction scheme: $3CO_2 + H_2 + 2e \rightarrow CO + 2HCO_3^-$. The anion exchange membrane may be inserted into a membrane electrode assembly (MEA) to prevent deterioration of the carbon dioxide conversion performance of the cathode due to the accumulation of hydronium ions ($H^+$) on the surface of the cation exchange membrane. Preferably, the carbon dioxide conversion device is a carbon dioxide electrolyser in which electrochemical reduction of carbon dioxide ($CO_2$) into various products such as formic acid (HCOOH), carbon monoxide (CO), methanol ($CH_3OH$), ethanol ($C_2H_5OH$), methane ($CH_4$), ethylene ($C_2H_4$) and/or other carbon-based compounds (e.g., higher alcohols, higher hydrocarbons) may be performed.

Preferably, the anion exchange membrane is adapted to block or at least significantly reduces crossover of hydrogen between the cathode and the anode compartments, so that the overall energy efficiency of the cell may be improved. More preferably, hydrogen crossover is prevented even under operating cell voltages of 2.0 V or more.

Hereinafter, embodiments of the present disclosure will be further described with reference to specific experimental examples.

## Synthesis Examples

Monomers 1 to 5 below were synthesized and used for the preparation of copolymers in the examples and comparative examples.

<Monomer 1>

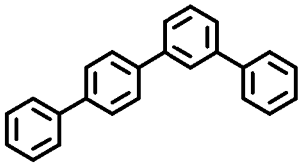

<Monomer 2>

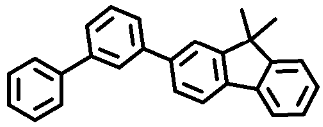

<Monomer 3>

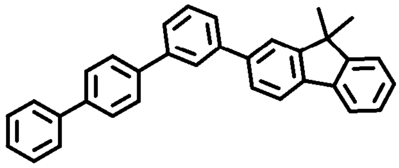

<Monomer 4>

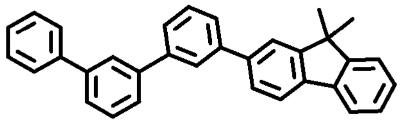

<Monomer 5>

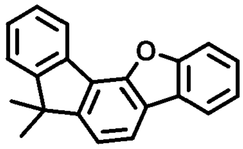

**Synthesis Example 1: Synthesis of Monomer 1**

3-Bromo-1,1':4',1"-terphenyl (5.0 g, 16.2 mmol), phenylboronic acid (2.4 g, 19.4 mmol), and tetrahydrofuran (80 mL) were added to a 250 mL two-necked round-bottom flask and stirred to prepare a mixed solution. An aqueous solution (13.4 mL) containing tetrakis(triphenylphosphine)palladium(0) (0.4 g, 0.3 mmol) and potassium carbonate (6.7 g, 48.5 mmol) was added, and the mixture was stirred at 65 °C for 8 hours. After stirring, the mixture was cooled to room temperature and extracted with ethyl acetate (100 mL) and water (50 mL). The aqueous layer was removed using a separatory funnel, and the organic solvent layer was further washed with water (50 mL). The aqueous layer was then separated and removed. The organic solvent layer was dried over anhydrous magnesium sulfate, filtered, and concentrated under reduced pressure. The product was purified by silica gel column chromatography with dichloromethane/n-hexane (5:95 volume ratio), yielding 3.0 g of the final monomer 1 as a white solid.

The results of $^1$H-Nuclear Magnetic Resonance ($^1$H-NMR) spectroscopy of monomer 1 are as follows.

$^1$H-NMR($CDCl_3$, ppm): 7.88-7.87(t,1H), 7.77-7.72(m, 4H), 7.70-7.68(m, 4H), 7.67-7.61(m, 2H), 7.58-7.55(t, 1H), 7.52-7.48(td, 4H), 7.42-7.38(q, 2H)

Synthesis Example 2: Synthesis of Monomer 2

2-(3-Bromophenyl)-9,9-dimethyl-9H-fluorene (3.0 g, 8.6 mmol), phenylboronic acid (1.3 g, 10.3 mmol), and tetrahydrofuran (43 mL) were added to a 100 mL two-necked round-bottom flask and stirred to prepare a mixed solution. To the prepared mixed solution, an aqueous solution (7.1 mL) containing Tetrakis(triphenylphosphine)palladium(0) (0.2 g, 0.2 mmol) and potassium carbonate (3.6 g, 25.8 mmol) was added, and the mixture was stirred at 65 °C for 8 hours. After stirring, the mixture was cooled to room temperature, and ethyl acetate (80 mL) and water (40 mL) were added to perform extraction. The aqueous layer was removed through a separatory funnel, and the organic solvent layer was additionally washed with water (40 mL), and then the aqueous layer was separated and removed. The organic solvent layer was dried over anhydrous magnesium sulfate, filtered, and concentrated under reduced pressure. The product was purified by silica gel column chromatography with ethyl acetate / n-hexane (5:95 volume ratio) to obtain 2.4 g of the final monomer 2 as a white solid.

The results of $^1$H-Nuclear Magnetic Resonance ($^1$H-NMR) spectroscopy analysis performed on the monomer 2 are as follows.

$^1$H-NMR($CDCl_3$, ppm): 7.91-7.90(t, 1H), 7.85-7.84(d, 1H), 7.81-7.79(dd, 1H), 7.73(m, 2H), 7.71(s, 1H), 7.70-7.66(td, 2H), 7.63-7.61(m, 1H), 7.59-7.56(t, 1H), 7.54-7.49(q, 3H), 7.44-7.36(m, 3H), 1.59(s, 6H)

Synthesis Example 3: Synthesis of Monomer 3

2-(3-Bromophenyl)-9,9-dimethyl-9H-fluorene (3.1 g, 8.6 mmol), 4-Biphenylboronic acid (2.1 g, 10.3 mmol), and Tetrahydrofuran (43 mL) were added and stirred to prepare a mixed solution. An aqueous solution (7.1 mL) containing tetrakis(triphenylphosphine)palladium(0) (0.2 g, 0.2 mmol) and Potassium carbonate (3.6 g, 25.8 mmol) was added to the prepared mixed solution, and the mixture was stirred at 65 °C for 8 hours. After stirring, the mixture was cooled to room temperature, and ethyl acetate (80 mL) and water (40 mL) were added to perform extraction. The aqueous layer was removed through a separatory funnel, and the organic solvent layer was additionally washed with water (40 mL), and then the aqueous layer was separated and removed. The organic solvent layer was dried over anhydrous magnesium sulfate, filtered, and concentrated under reduced pressure. The product was purified by silica gel column chromatography with dichloromethane/n-hexane (5:95 by volume) to obtain 2.6 g of the final monomer 3 as a white solid.

The results of $^1$H-Nuclear Magnetic Resonance (1H-NMR) spectroscopy analysis performed on the monomer 3 are as follows.

$^1$H-NMR($CDCl_3$, ppm): 7.94-7.93(t, 1H), 7.85-7.83(d, 1H), 7.80-7.78(d, 3H), 7.75-7.73(m, 3H), 7.71-7.65(m, 5H), 7.60-7.57(t, 1H), 7.52-7.47(m, 3H), 7.42-7.35(m, 3H), 1.58(s, 6H)

Synthesis Example 4: Synthesis of Monomer 4

In a 100 mL two-necked round-bottom flask, 2-(3-Bromophenyl)-9,9-dimethyl-9H-fluorene (3.1 g, 8.6 mmol) and 3-Biphenylboronic acid (1.4 g, 6.9 mmol), Tetrahydrofuran (30 mL) was added and stirred to prepare a mixed solution. An aqueous solution (4.8 mL) containing tetrakis(triphenylphosphine)palladium(0) (0.1 g, 0.1 mmol) and Potassium carbonate (2.4 g, 17.2 mmol) was added to the prepared mixed solution, and the mixture was stirred at 65 °C for 8 hours. After stirring, it was cooled to room temperature and extracted with ethyl acetate (70 mL) and water (35 mL). The aqueous layer was removed through a separatory funnel, and the organic solvent layer was additionally washed with water (35 mL), and then the aqueous layer was separated and removed. The organic solvent layer was dried over anhydrous magnesium sulfate, filtered, and concentrated under reduced pressure. The product was purified by silica gel column chromatography with dichloromethane / n-hexane (5:95 volume ratio) to obtain 1.3 g of the final monomer 4 as a white solid.

The results of $^1$H-Nuclear Magnetic Resonance ($^1$H-NMR) spectroscopy for the monomer 4 are as follows.

$^1$H-NMR($CDCl_3$, ppm): 7.95-7.91(d, 2H), 7.88-7.78(dd, 2H), 7.67-6.64(m, 8H), 7.61-7.57(m, 2H), 7.52-7.49(m, 3H), 7.43-7.36(m, 3H), 1.58(s, 6H)

Synthesis Example 5: Synthesis of Monomer 5

(1) Synthesis of Intermediate Compound 5-1

<Intermediate Compound 5-1>

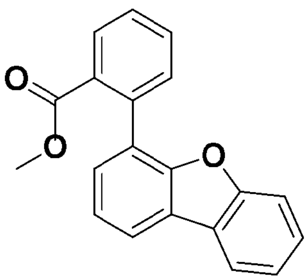

Dibenzofuran-4-boronic acid (5.0 g, 23.6 mmol), methyl 2-bromobenzoate (6.1 g, 28.3 mmol), and tetrahydrofuran (120 mL) were added to a 500 mL two-necked round-bottomed flask and stirred to prepare a mixed solution. An aqueous solution (19.6 mL) containing tetrakis(triphenylphosphine)palladium(0) (0.5 g, 0.5 mmol) and potassium carbonate (9.8 g, 70.8 mmol) was added to the prepared mixed solution, and the mixture was stirred at 65 °C for 8 hours. After stirring, the mixture was cooled to room temperature and extracted with ethyl acetate (100 mL) and water (50 mL). The aqueous layer was removed through a separatory funnel, and the organic solvent layer was additionally washed with water (50 mL), and then the aqueous layer was separated and removed. The organic layer was dried over anhydrous magnesium sulfate, filtered, and concentrated under reduced pressure. The product was purified by silica gel column chromatography with n-hexane/ethyl acetate (5:95 volume ratio), yielding 6.0 g of colorless liquid intermediate compound

5-1.

The results of $^1$H-Nuclear Magnetic Resonance ($^1$H-NMR) spectroscopy of intermediate compound 5-1 are as follows.

$^1$H-NMR($CDCl_3$, ppm): 8.09-8.03(d, 1H), 8.01-7.98(m, 2H) 7.69-7.67(m, 1H), 7.66(d, 1H), 7.61-7.52(m, 2H), 7.48-7.44(m, 3H), 7.39-7.37(t, 1H), 3.52(s, 3H)

(2) Synthesis of Intermediate Compound 5-2

<Intermediate Compound 5-2>

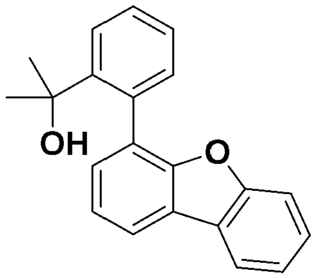

Intermediate compound 5-1 (5.7 g, 18.9 mmol) and tetrahydrofuran (75 mL) were added to a 250 mL two-necked round-bottom flask and stirred to prepare a solution. The stirring temperature was lowered to 0 °C using a cooling water bath, and the solution was stirred under a nitrogen atmosphere. 19 mL (56.6 mmol) of a 3M methyl magnesium bromide in tetrahydrofuran solution was slowly added and stirred at room temperature for 8 hours. After stirring, the mixture was cooled to 0 °C again and water (10 mL) was added to terminate the reaction. Saturated ammonium chloride aqueous solution (20 mL) and ethyl acetate (50 mL) were then added, and the aqueous layer was removed through a separatory funnel. The organic solvent layer was further washed with water (50 mL) and then separated and removed. The organic solvent layer was dried over anhydrous magnesium sulfate, filtered, and concentrated under reduced pressure. 5.7 g of intermediate compound 5-2 as a white solid was obtained without further purification.

The results of $^1$H-Nuclear Magnetic Resonance ($^1$H-NMR) spectroscopy analysis of the intermediate compound 5-2 are as follows.

$^1$H-NMR($CDCl_3$, ppm): 8.03-7.99(m, 2H), 7.83-7.81(m, 1H), 7.53-7.37(m, 7H), 7.26-7.24(m, 1H), 1.89(br, 1H), 1.53(s, 3H), 1.43(s, 3H)

(3) Synthesis of Monomer 5

Intermediate compound 5-2 (5.5 g, 18.2 mmol) and dichloromethane (60 mL) were added to a 250 mL two-necked round-bottom flask and stirred to prepare a solution. The stirring temperature was lowered to 0 °C using a cooling water bath, and the solution was stirred under a nitrogen atmosphere. Boron trifluoride etherate (2.6 g, 18.2 mmol) was slowly added and stirred at room temperature for 8 h. After stirring, the mixture was cooled to 0 °C again and water (10 mL) was added to terminate the reaction. Saturated sodium bicarbonate aqueous solution (20 mL) and dichloromethane (50 mL) were then added. The aqueous layer was removed through a separatory funnel, and the organic solvent layer was further washed with water (50 mL). The aqueous layer was separated and removed. The organic solvent layer was dried over anhydrous magnesium sulfate, filtered, and concentrated under reduced pressure. The product was purified by silica gel column chromatography with dichloromethane/n-hexane (5:95 volume ratio) to obtain 4.5 g of final monomer 5.

The results of $^1$H-Nuclear Magnetic Resonance (1H-NMR) spectroscopy analysis performed on the monomer 5 are as follows.

$^1$H-NMR($CDCl_3$, ppm): 8.82-8.80(d, 1H), 8.01-8.03(d, 1H), 7.96-7.94(d, 1H), 7.71-7.73(d, 1H), 7.54-7.47(m, 4H), 7.46-7.39(m, 2H), 1.61(s, 6H)

**Example 1 (Copolymer 1A)**

(1) Preparation of precursor of Copolymer 1A

Monomer 1 (0.20 g, 0.65 mmol), 9,9-bis(6-bromohexyl)-9H-fluorene (0.32 g, 0.65 mmol), and dichloromethane (3.5 mL) were added to a 25 mL round-bottom flask and stirred to prepare a solution. The stirring temperature was lowered

to 0 °C using a cooling water bath, and the solution was stirred under a nitrogen atmosphere. 1,1,1-trifluoroacetone (0.18 mL, 1.96 mmol) and trifluoromethanesulfonic acid (1.6 mL, 17.70 mmol) were then added. The resulting mixture was stirred at 0 °C for 2 hours, and the viscous solution was poured into methanol (100 mL) to precipitate a solid. The precipitated solid was filtered, washed twice with 50 mL of methanol, and dried in an oven to obtain 0.67 g of the precursor of Copolymer 1A.

The results of gel permeation chromatography (GPC) performed on the precursor of Copolymer 1A are as follows. The GPC analysis was conducted using a Shodex KF-805L column with an Agilent 1260 HPLC system. Tetrahydrofuran (THF) was used as the eluent at a flow rate of 0.5 mL/min, and the analysis was performed at a column temperature of 40 °C.

Mn $1.99 \times 10^4$ g/mol, Mw $2.32 \times 10^5$ g/mol

<Precursor of Copolymer 1A>

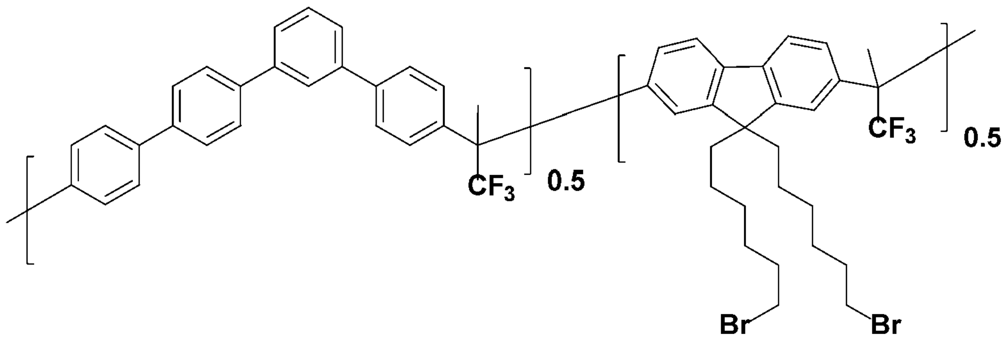

(2) Preparation of Copolymer 1A

The precursor of Copolymer 1A (0.67 g) and N-methyl-2-pyrrolidone (6.5 mL) were added to a 25 mL round-bottom flask and stirred to prepare a solution. After the precursor of Copolymer 1A was completely dissolved, a 43% aqueous trimethylamine solution (1.1 mL) was slowly added. The mixture was stirred at room temperature for 24 hours, and the solution was poured into diethyl ether (100 mL) to precipitate a solid. The precipitated solid was filtered, washed twice with 50 mL of diethyl ether, and dried in an oven to obtain 0.76 g of Copolymer 1A.

Copolymer 1A includes the repeating unit represented by Formula 1A below.

**[Formula 1A]**

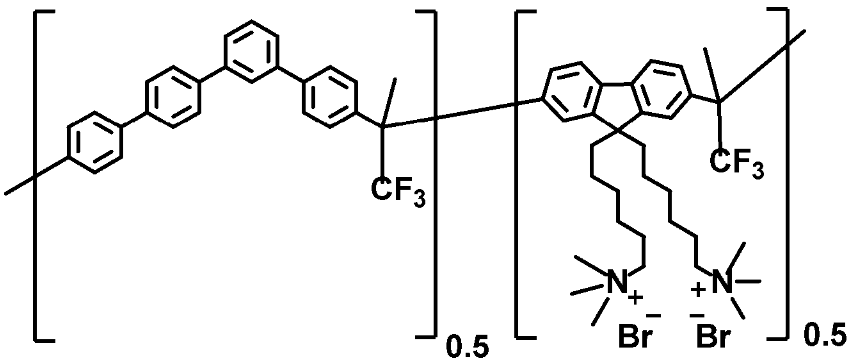

**<u>Example 2</u> (Copolymer 1B)**

(1) Preparation of precursor of Copolymer 1B

Monomer 1 (0.16 g, 0.52 mmol), 9,9-bis(6-bromohexyl)-9H-fluorene (0.39 g, 0.78 mmol), and dichloromethane (4.0 mL) were added to a 25 mL round-bottom flask and stirred to prepare a solution. The stirring temperature was lowered

to 0 °C using a cooling water bath, and the solution was stirred under a nitrogen atmosphere. 1,1,1-trifluoroacetone (0.18 mL, 1.96 mmol) and trifluoromethanesulfonic acid (1.3 mL, 14.75 mmol) were then added. The resulting mixture was stirred at 0 °C for 1 hour, and the viscous solution was poured into methanol (100 mL) to precipitate a solid. The precipitated solid was filtered, washed twice with 50 mL of methanol, and dried in an oven to obtain 0.65 g of a Copolymer 1B precursor.

The results of gel permeation chromatography (GPC) performed on the precursor of Copolymer 1B are as follows.

Mn $1.78 \times 10^4$ g/mol, Mw $1.94 \times 10^5$ g/mol

<Precursor of Copolymer 1B>

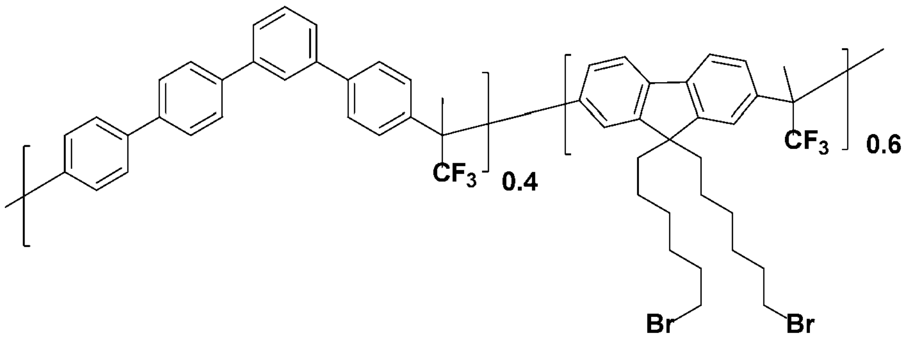

(2) Preparation of Copolymer 1B

**The** precursor of Copolymer 1B (0.65 g) and N-methyl-2-pyrrolidone (6.5 mL) were added to a 25 mL round-bottom flask and stirred to prepare a solution. After the precursor of Copolymer 1B was completely dissolved, a 43% aqueous trimethylamine solution (1.3 mL) was slowly added. The mixture was stirred at room temperature for 24 hours and then poured into diethyl ether (100 mL) to precipitate a solid. The precipitated solid was filtered, washed twice with 50 mL of diethyl ether, and dried in an oven to obtain 0.70 g of Copolymer 1B.

Copolymer 1B includes the repeating unit represented by Formula 1B below.

**[Formula 1B]**

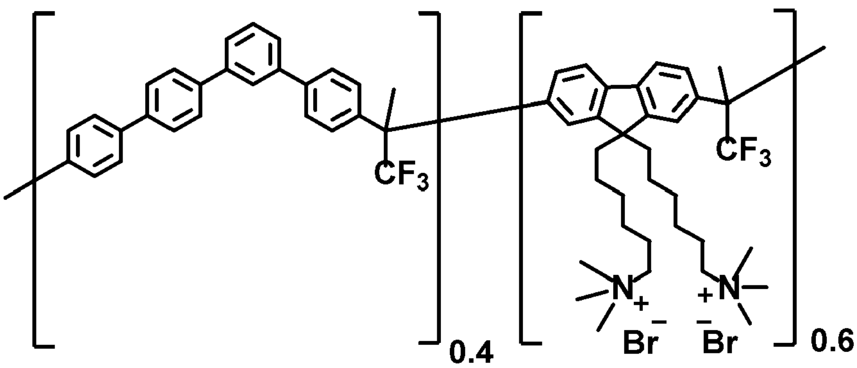

**Example 3 (Copolymer 1C)**

(1) Preparation of precursor of Copolymer 1C

Monomer 2 (0.17 g, 0.49 mmol), 9,9-bis(6-bromohexyl)-9H-fluorene (0.36 g, 0.74 mmol), and dichloromethane (3.0 mL) were added to a 25 mL round-bottom flask and stirred to prepare a solution. The stirring temperature was lowered to 0 °C using a cooling water bath, and the solution was stirred under a nitrogen atmosphere. 1,1,1-trifluoroacetone (0.16 mL, 1.84 mmol) and trifluoromethanesulfonic acid (1.5 mL, 16.63 mmol) were then added. The resulting mixture was stirred at 0 °C for 2 hours, and the viscous solution was poured into methanol (100 mL) to precipitate a solid. The

precipitated solid was filtered, washed twice with 50 mL of methanol, and dried in an oven to obtain 0.65 g of the precursor of Copolymer 1C.

The results of gel permeation chromatography (GPC) performed on the precursor of Copolymer 1C are as follows.

Mn $1.93 \times 10^4$ g/mol, Mw $1.84 \times 10^6$ g/mol

<Precursor of Copolymer 1C>

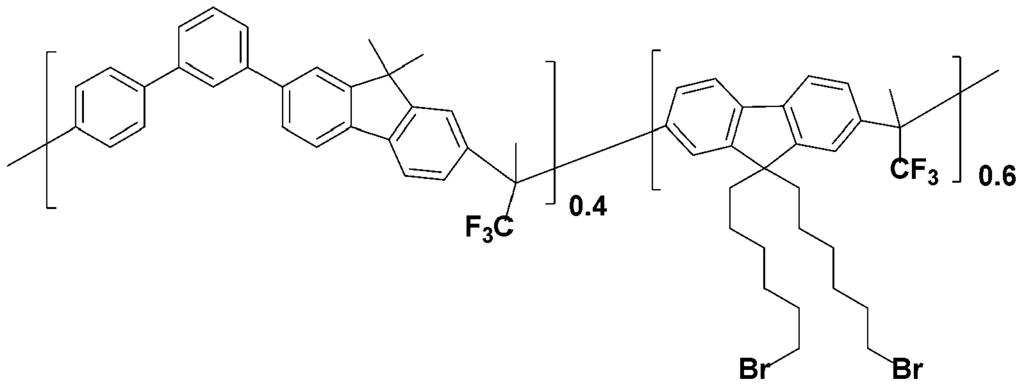

(2) Preparation of Copolymer 1C

The precursor of Copolymer 1C (0.65 g) and N-methyl-2-pyrrolidone (16.4 mL) were added to a 25 mL round-bottom flask and stirred to prepare a solution. After the precursor of Copolymer 1C was completely dissolved, a 43% aqueous trimethylamine solution (1.2 mL) was slowly added. The mixture was stirred at room temperature for 48 hours and then poured into diethyl ether (100 mL) to precipitate a solid. The precipitated solid was filtered, washed twice with 50 mL of diethyl ether, and dried in an oven to obtain 0.63 g of Copolymer 1C.

Copolymer 1C includes the repeating unit represented by Formula 1C below.

**[Formula 1C]**

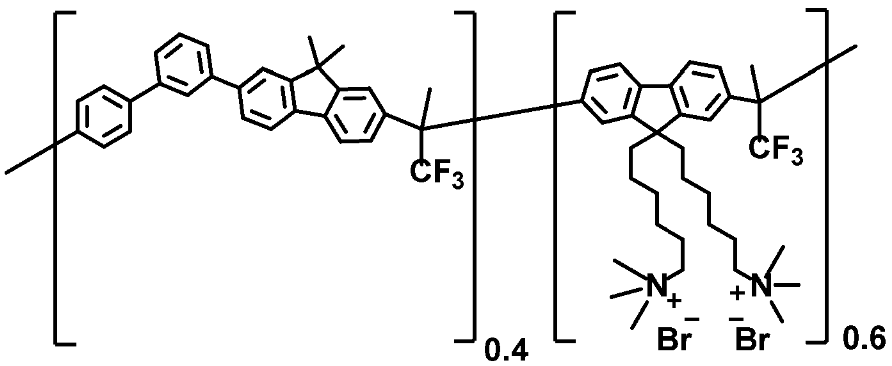

**<u>Example 4</u> (Copolymer** 1D)

(1) Preparation of precursor of Copolymer 1D

Monomer 3 (0.20 g, 0.47 mmol), 9,9-bis(6-bromohexyl)-9H-fluorene (0.54 g, 1.10 mmol), and dichloromethane (9.5 mL) were added to a 25 mL round-bottom flask and stirred to prepare a solution. The stirring temperature was lowered to 0 °C using a cooling water bath, and the solution was stirred under a nitrogen atmosphere. 1,1,1-trifluoroacetone (0.21 mL, 2.37 mmol) and trifluoromethanesulfonic acid (0.4 mL, 4.46 mmol) were then added. The resulting mixture was stirred at 0 °C for 2 hours, and the viscous solution was poured into methanol (100 mL) to precipitate a solid. The precipitated solid was filtered, washed twice with 50 mL of methanol, and dried in an oven to obtain 0.89 g of the precursor of Copolymer 1D.

The results of gel permeation chromatography (GPC) performed on the precursor of Copolymer 1D are as follows.

**Mn** $2.01 \times 10^4$ g/mol, Mw $9.20 \times 10^4$ g/mol

<Precursor of Copolymer 1D>

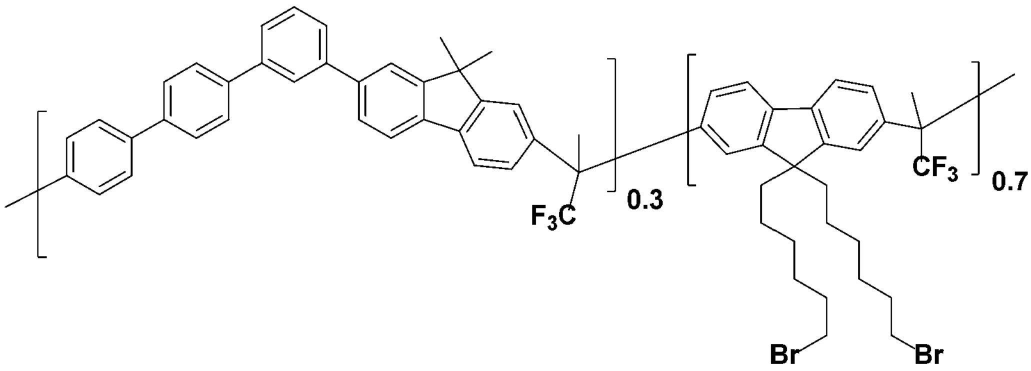

(2) Preparation of Copolymer 1D

The precursor of Copolymer 1D (0.89 g) and dimethylformamide (8.0 mL) were added to a 25 mL round-bottom flask and stirred to prepare a solution. After the precursor of Copolymer 1D was completely dissolved, a 43% aqueous trimethylamine solution (1.5 mL) was slowly added. The mixture was stirred at room temperature for 48 hours and then poured into diethyl ether (100 mL) to precipitate a solid. The precipitated solid was filtered, washed twice with 50 mL of diethyl ether, and dried in an oven to obtain 1.04 g of Copolymer 1D.

Copolymer 1D includes the repeating unit represented by Formula 1D below.

**[Formula 1D]**

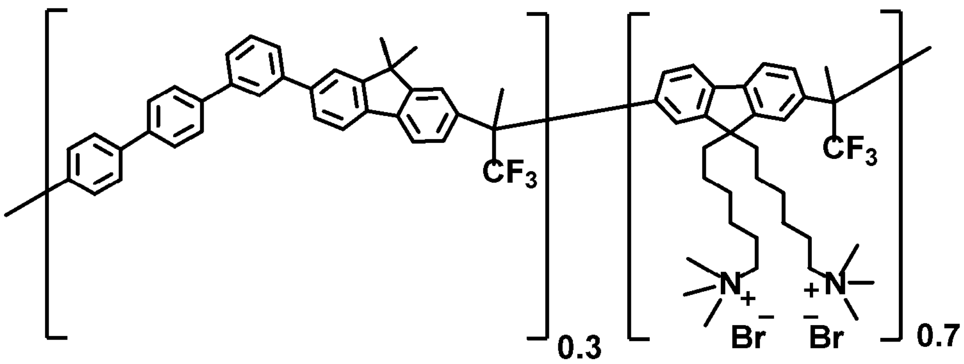

**<u>Example 5</u>**

(1) Preparation of precursor of Copolymer 1E

Monomer 3 (0.15 g, 0.35 mmol), 9,9-bis(6-bromohexyl)-9H-fluorene (0.41 g, 0.83 mmol), Monomer 5 (0.03 g, 0.09 mmol), and dichloromethane (7.1 mL) were added to a 25 mL round-bottom flask and stirred to prepare a solution. The stirring temperature was lowered to 0 °C using a cooling water bath, and the solution was stirred under a nitrogen atmosphere. 1,1,1-trifluoroacetone (0.16 mL, 1.77 mmol) and trifluoromethanesulfonic acid (0.3 mL, 2.67 mmol) were then added. The resulting mixture was stirred at 0 °C for 7 hours, and the viscous solution was poured into methanol (100 mL) to precipitate a solid. The precipitated solid was filtered, washed twice with 50 mL of methanol, and dried in an oven to obtain 0.70 g of the precursor of Copolymer 1E.

The results of gel permeation chromatography (GPC) performed on the precursor of Copolymer 1E are as

follows.

Mn 2.12 × $10^4$ g/mol, Mw 2.68 × $10^5$ g/mol

The precursor of Copolymer 1E includes the crosslinking unit represented by Formula 1E and the repeating unit represented by Formula 1E-1 below, and x = 0.28, y = 0.65, z = 0.07.

[Formula 1E]

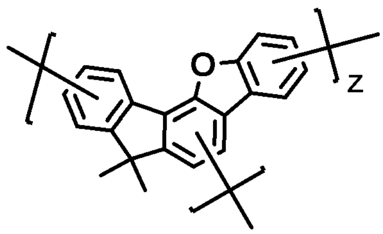

[Formula 1E-1]

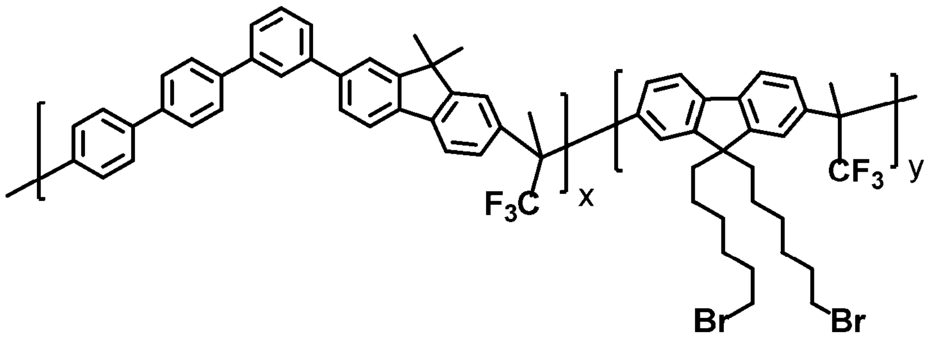

(2) Preparation of Copolymer 1E

The precursor of Copolymer 1E (0.70 g), dimethylformamide (6.0 mL), and N-methyl-2-pyrrolidone (6.0 mL) were added to a 25 mL round-bottom flask and stirred to prepare a solution. After the precursor of Copolymer 1E was completely dissolved, a 43% aqueous trimethylamine solution (1.1 mL) was slowly added. The mixture was stirred at room temperature for 48 hours and then poured into diethyl ether (100 mL) to precipitate a solid. The precipitated solid was filtered, washed twice with 50 mL of diethyl ether, and dried in an oven to obtain 0.78 g of Copolymer 1E.

Copolymer 1E includes the crosslinking unit represented by Formula 1E and the repeating unit represented by Formula 1E-2 below, and x = 0.28, y = 0.65, z = 0.07. The crosslinking unit represented by Formula 1E and repeating unit represented by Formula 1E-2 may be directly crosslinked or may be crosslinked through a methylene group derived from 1,1,1-trifluoroacetone.

**[Formula 1E]**

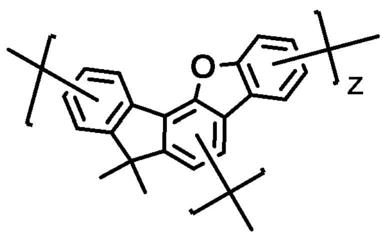

[Formula 1E-2]

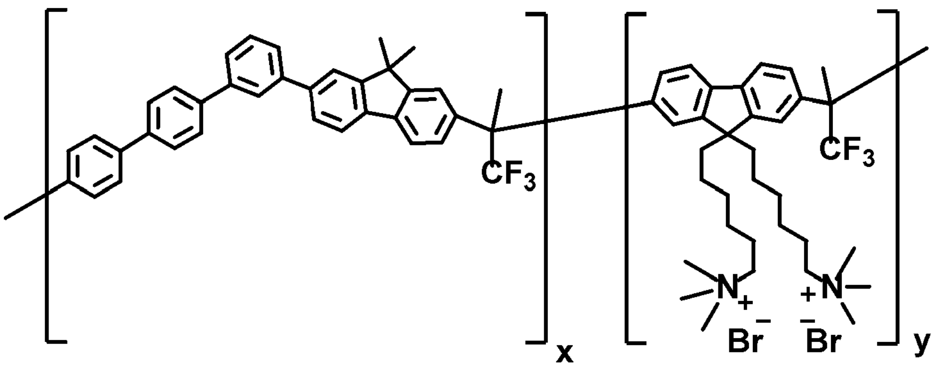

**Example 6 (Copolymer 1F)**

(1) Preparation of precursor of Copolymer 1F

Monomer 3 (0.15 g, 0.35 mmol), 9,9-bis(6-bromohexyl)-9H-fluorene (0.41 g, 0.83 mmol), 1,3,5-triphenylbenzene (0.02 g, 0.06 mmol), and dichloromethane (7.1 mL) were added to a 25 mL round-bottom flask and stirred to prepare a solution. The stirring temperature was lowered to 0 °C using a cooling water bath, and the solution was stirred under a nitrogen atmosphere. 1,1,1-trifluoroacetone (0.16 mL, 1.77 mmol) and trifluoromethanesulfonic acid (0.3 mL, 2.67 mmol) were then added. The resulting mixture was stirred at 0 °C for 6 hours, and the viscous solution was poured into methanol (100 mL) to precipitate a solid. The precipitated solid was filtered, washed twice with 50 mL of methanol, and dried in an oven to obtain 0.64 g of the precursor of Copolymer 1F.

The results of gel permeation chromatography (GPC) performed on the Copolymer 1F precursor are as follows.

Mn $2.58 \times 10^4$ g/mol, Mw $1.10 \times 10^6$ g/mol

The precursor of Copolymer 1F includes the crosslinking unit represented by Formula 1F and the repeating unit represented by Formula 1F-1 below, and x = 0.29, y = 0.67, z = 0.05.

[Formula 1F]

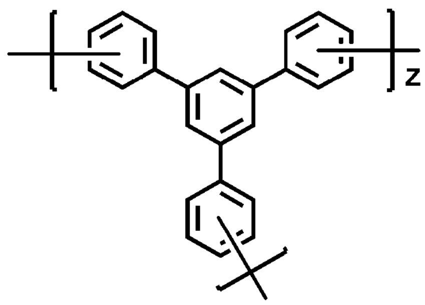

[Formula 1F-1]

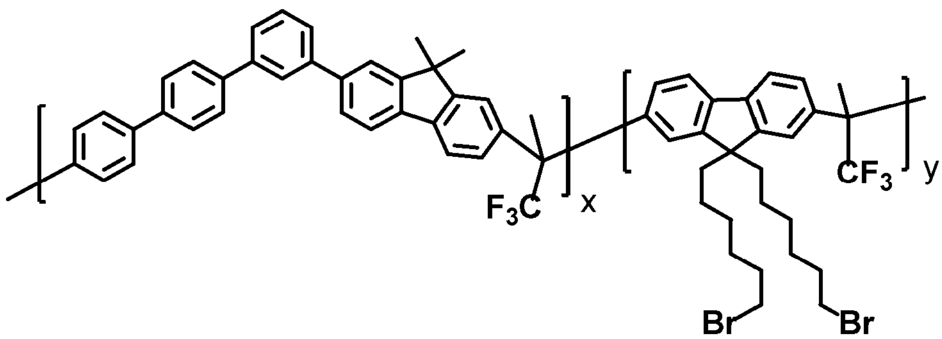

(2) Preparation of Copolymer 1F

The precursor of Copolymer 1F (0.64 g), dimethylformamide (3.0 mL), and N-methyl-2-pyrrolidone (7.0 mL) were added to a 25 mL round-bottom flask and stirred to prepare a solution. After the precursor of Copolymer IF was completely dissolved, a 43% aqueous trimethylamine solution (1.1 mL) was slowly added. The mixture was stirred at room temperature for 48 hours and then poured into diethyl ether (100 mL) to precipitate a solid. The precipitated solid was filtered, washed twice with 50 mL of diethyl ether, and dried in an oven to obtain 0.77 g of Copolymer 1F.

Copolymer 1F includes the crosslinking unit represented by Formula 1F and the repeating unit represented by Formula 1F-2 below, and x = 0.29, y = 0.67, z = 0.05. The crosslinking unit represented by Formula 1F and the repeating unit represented by Formula 1F-2 may be directly crosslinked or may be crosslinked through a methylene group derived from 1,1,1-trifluoroacetone.

**[Formula 1F]**

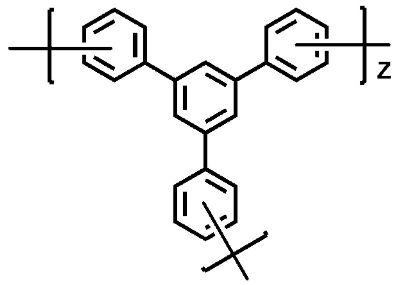

**[Formula 1F-2]**

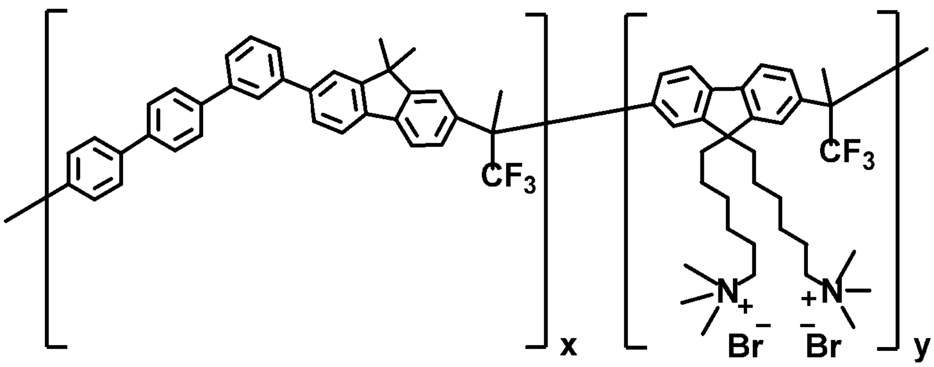

**Example 7 (Copolymer 1G)**

(1) Preparation of precursor of Copolymer 1G

Monomer 4 (0.25 g, 0.59 mmol), 9,9-bis(6-bromohexyl)-9H-fluorene (0.68 g, 1.38 mmol), and dichloromethane (9.9 mL) were added to a 25 mL round-bottom flask and stirred to prepare a solution. The stirring temperature was lowered to 0 °C using a cooling water bath, and the solution was stirred under a nitrogen atmosphere. 1,1,1-trifluoroacetone (0.26 mL, 2.96 mmol) and trifluoromethanesulfonic acid (0.5 mL, 5.57 mmol) were then added. The resulting mixture was stirred at 0 °C for 7 hours, and the viscous solution was poured into methanol (100 mL) to precipitate a solid. The precipitated solid was filtered, washed twice with 50 mL of methanol, and dried in an oven to obtain 1.19 g of the precursor of Copolymer 1G.

The results of gel permeation chromatography (GPC) performed on the precursor of Copolymer 1G are as follows:

Mn $1.86 \times 10^4$ g/mol, Mw $1.26 \times 10^5$ g/mol

<Precursor of Copolymer 1G>

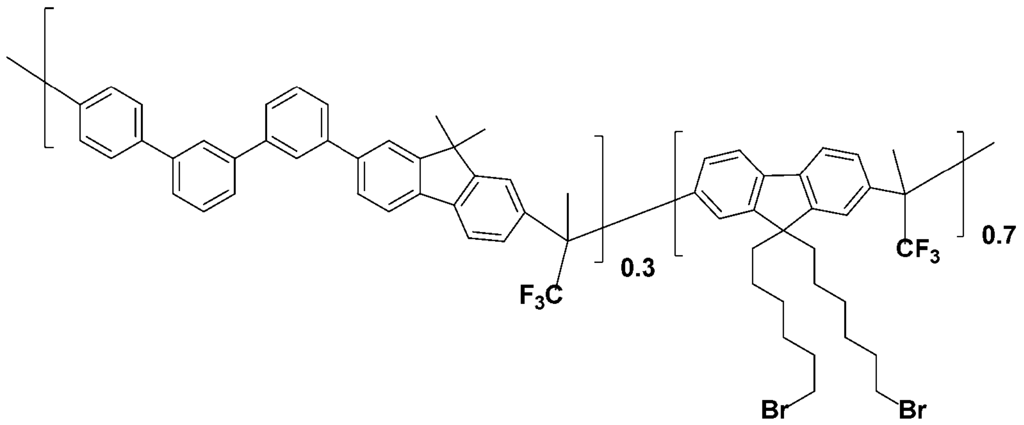

(2) Preparation of Copolymer 1G

The precursor of Copolymer 1G (1.14 g) and dimethylformamide (9.9 mL) were added to a 25 mL round-bottom flask and stirred to prepare a solution. After the precursor of Copolymer 1G was completely dissolved, a 43% aqueous trimethylamine solution (1.8 mL) was slowly added. The mixture was stirred at room temperature for 48 hours and then poured into diethyl ether (120 mL) to precipitate a solid. The precipitated solid was filtered, washed twice with 70 mL of diethyl ether, and dried in an oven to obtain 1.18 g of Copolymer 1G.

Copolymer 1G includes the repeating unit represented by Formula 1G below.

**[Formula 1G]**

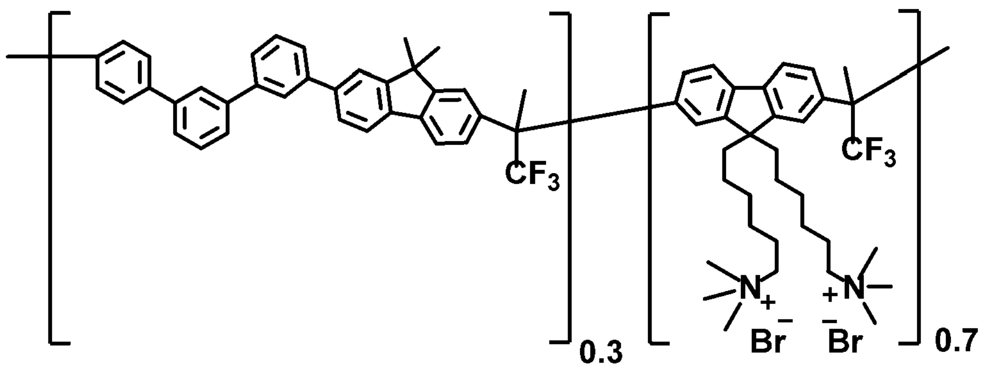

**Comparative Example 1 (Copolymer H)**

9,9-Dimethylfluorene (0.24 g, 1.24 mmol), 9,9-bis(6-bromohexyl)-9H-fluorene (0.79 g, 1.60 mmol), and dichloromethane (17.0 mL) were added to a 100 mL round-bottom flask and stirred to prepare a solution. The stirring temperature was lowered to 0 °C using a cooling water bath, and the solution was stirred under a nitrogen atmosphere. 1,1,1-trifluoroacetone (0.38 mL, 4.26 mmol) and trifluoromethanesulfonic acid (0.71 mL, 8.02 mmol) were then added. The resulting mixture was stirred at 0 °C for 2 hours, and the viscous solution was poured into methanol (200 mL) to precipitate a solid. The precipitated solid was filtered, washed twice with 50 mL of methanol, and dried in an oven to obtain 1.20 g of the precursor of Copolymer H.

The precursor of Copolymer H (1.20 g) and N-methyl-2-pyrrolidone (13.3 mL) were added to a 50 mL round-bottom flask and stirred to prepare a solution. After the precursor of Copolymer H was completely dissolved, a 43% aqueous solution of trimethylamine (2.49 mL) was slowly added. The mixture was stirred at room temperature for 48 hours, and the solution was poured into ethyl acetate (200 mL) to precipitate a solid. The precipitated solid was filtered, washed twice with 50 mL of ethyl acetate, and dried in an oven to obtain 1.18 g of Copolymer H.

Copolymer H includes the repeating unit represented by Formula H below:

[Formula H]

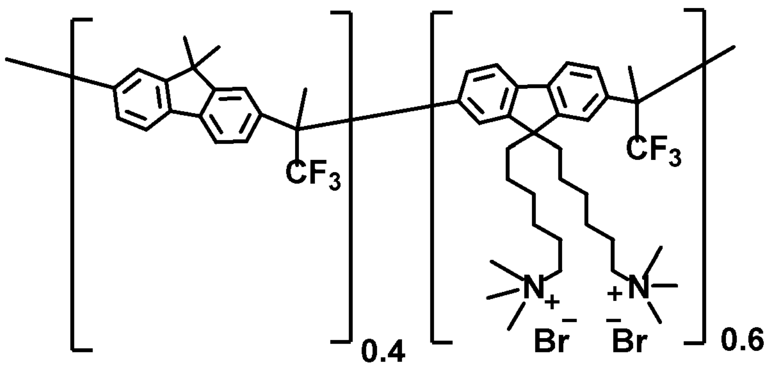

**Comparative Example 2**

Sustainion® X37-50 Grade RT from Dioxide Materials was used as an anion exchange membrane.

**Comparative Example 3**

Sustainion® X37-50 Grade T from Dioxide Materials was used as an anion exchange membrane.

**Experimental Example**

<Preparation of ion exchange membrane>

(1) Anion exchange membranes were prepared using the copolymers synthesized in the above-described examples and comparative examples, as follows:
Specifically, each prepared copolymer was dissolved in N-methyl-2-pyrrolidone, filtered through a 5 μm syringe filter to remove impurities, and then cast onto a glass plate using a blade. The solvent was removed by evaporation in an 80 °C oven, followed by drying, and the membrane was peeled off from the glass plate with distilled water to obtain an anion exchange membrane.

(2) The obtained anion exchange membrane may be used by immersing it in a 1 M potassium hydroxide aqueous solution to convert the anions to $OH^-$. The membrane prepared in (1) above was immersed in a 1 M KOH aqueous solution at room temperature for 24 hours to convert the anions into $OH^-$.

**Experimental Example 1: Room-temperature ionic conductivity**

The ionic conductivity (σ) of the anion exchange membrane was evaluated at room temperature (25 °C) in triple-distilled water using a membrane in the $OH^-$ form as follows:
The anion exchange membrane was cut into 1 cm × 3 cm samples and secured between Pt electrodes of a conductivity clamp (BT-110, Scribner).
The resistance (R) of each membrane sample was measured by the four-point probe method using an impedance analyzer (VSP-3e, Biologics) in the frequency range of 0.1 kHz to 1 MHz at room temperature. The thickness (T) of the membrane was measured using an outside micrometer gauge in a wet state, and the minimum measurement unit of the micrometer was 1 μm.
The ionic conductivity (σ) ($C_1$) was calculated according to Equation 2 below.

[Equation 2]

$$\sigma = \frac{L}{R \times A} = \frac{L}{R \times W \times T}$$

In Equation 2, R denotes the membrane resistance (Ω), A denotes the membrane cross-sectional area ($cm^2$), L denotes the distance between the electrodes (cm), W denotes the width of the membrane sample (cm), and T denotes the membrane thickness (cm).

For reference, the ion-exchange capacity (IEC, mmol/g, based on $OH^-$) of the anion exchange membrane was determined by converting the membrane into the $OH^-$ form, cutting it into a predetermined size, reacting it with a standard acid solution of known concentration (e.g., 0.01 M HCl), and subsequently performing back-titration of the remaining acid with a standard base solution (e.g., 0.01 M NaOH). The IEC (mmol/g) was calculated by dividing the moles of acid consumed by the membrane by the dry mass of the membrane. The membrane converted into the $OH^-$ form was prepared by cutting a membrane in the X-form (primarily halide form) into a predetermined size, measuring its mass, and immersing it in a 1 M KOH aqueous solution for at least 24 hours to exchange the anions ($X^- \rightarrow OH^-$). The dry membrane mass refers to the mass measured prior to immersion in the 1 M KOH aqueous solution.

The results are shown in Table 1 below.

[TABLE 1]

| Classification | Ion-exchange capacity, IEC (meq/g, $OH^-$) | Thickness (μm) | Room-temperature ionic conductivity (mS/cm) |
|---|---|---|---|
| Example 1 | 2.04 | 30 | 30.7 |
| Example 2 | 2.36 | 40 | 44.0 |
| Example 3 | 2.29 | 38 | 34.9 |
| Example 4 | 2.50 | 52 | 54.2 |
| Example 5 | 2.40 | 55 | 53.4 |
| Example 6 | 2.43 | 37 | 50.9 |
| Example 7 | 2.50 | 55 | 52.1 |
| Comparative Example 1 | 2.50 | 50 | 32.7 |
| Comparative Example 2 | - | 50 | 38.0 |
| Comparative Example 3 | - | 50 | 32.7 |

The room-temperature ionic conductivities of the anion exchange membranes according to the examples and comparative examples were all 30 mS/cm or more, indicating that they achieved sufficient ionic conductivity. Among the repeating units represented by Formula 1, those satisfying $x < y$ and containing three phenylene groups exhibited higher room-temperature ionic conductivity, as observed in Examples 2 and 4 to 7.

**Experimental Example 2: High-temperature stability**

The high-temperature stability of the anion exchange membranes prepared in Examples 4, 6, and Comparative Example 1 was evaluated as follows.

As described in Experimental Example 1, anion exchange membrane samples were prepared, immersed them in a 1 M KOH solution, and stored in an oven at 80°C.

The membrane samples were stored in an 80°C oven for 7 days and/or 28 days, then removed, cooled to room temperature, and washed with triple-distilled water.

Then, ionic conductivity ($C_2$) was calculated using the same conditions and by the same method as described in Experimental Example 1.

The ionic conductivity ($C_1$) obtained in Experimental Example 1 and the ionic conductivity ($C_2$) obtained in Experimental Example 2 were substituted into Equation 1 below to calculate the reduction rate (R) of ionic conductivity.

[Equation 1]

$$\text{Ionic conductivity reduction rate (R, \%)} = ((C_1 - C_2) / C_1) \times 100$$

In Equation 1, $C_1$ denotes the ionic conductivity evaluated at room temperature for an anion exchange membrane including the copolymer for an anion exchange membrane, after converting the counterion to $OH^-$, and $C_2$ denotes the ionic conductivity evaluated at room temperature after immersing the anion exchange membrane in the $OH^-$ form in a 1 M

alkaline solution (1 M KOH), maintaining it at 80°C for 28 days, and then cooling it to room temperature.

The results are shown in Table 2 below.

[TABLE 2]

| Classification | Repeating unit (Formula) | Duration (days) | Ionic conductivity (mS/cm) | Ionic conductivity reduction rate (R) (%) |
|---|---|---|---|---|
| Example 4 | Formula 1D | 1 | 54.2 | - |
| | | 28 | 55.1 | -1.7 |
| Example 6 | Formula 1F | 1 | 50.9 | - |
| | | 28 | 49.7 | 2.4 |
| Comparative Example 1 | Formula H | 1 | 32.7 | - |
| | | 7 | 27.2 | 16.8 |
| | | 14 | 23.0 | 29.7 |

The anion exchange membrane prepared in Example 4 showed a -1.7% change in ionic conductivity before and after 28 days of exposure at high temperature, indicating that the conductivity was maintained or slightly improved, thereby confirming its operational stability and reliability.

The anion exchange membrane prepared in Example 6 showed a 2.4% decrease in ionic conductivity before and after 28 days of exposure at high temperature, demonstrating enhanced chemical and physical stability, thereby confirming that operational stability and reliability were ensured.

The anion exchange membrane prepared in Comparative Example 1 exhibited an ionic conductivity decrease exceeding 15% even before 28 days of high-temperature exposure, that is, after only 7 and 14 days, indicating that the membrane had poor chemical and physical stability and thus failed to ensure operational stability and reliability.

## Claims

**1.** A copolymer for an anion exchange membrane, comprising a repeating unit represented by Formula 1 below:

[Formula 1]

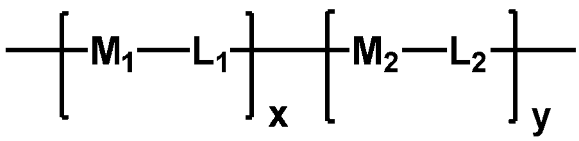

wherein in Formula 1, $M_1$ is selected from the arylene groups represented by any one of Formulae 2-1 and 2-2 below, $M_2$ is an arylene group represented by Formula 3 below, x and y are each independently 0.1 to 0.9 and x + y = 1, and $L_1$ and $L_2$ are each independently selected from the arylene groups represented by Formulae 4-1 and 4-2 below,

[Formula 2-1]

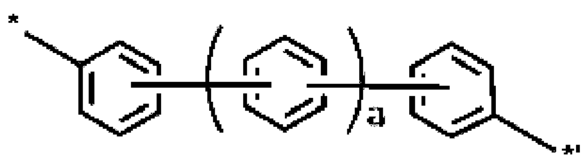

[Formula 2-2]

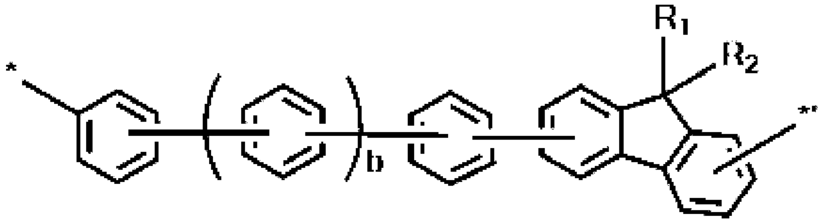

[Formula 3]

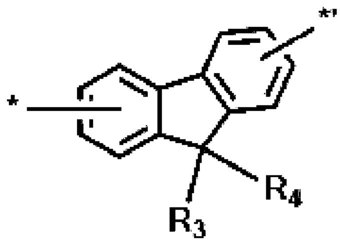

[Formula 4-1] [Formula 4-2]

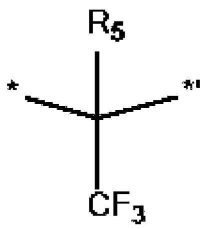

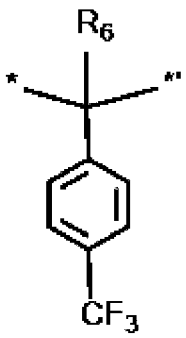

wherein in Formulae 2-1, 2-2, 3, 4-1, and 4-2:

a is an integer of 2 to 6, b is an integer of 0 to 4,
$R_1$ and $R_2$ are each independently a $C_1$-$C_{10}$ alkyl group,
$R_3$ and $R_4$ are each independently a $C_3$-$C_{10}$ alkyl group having a quaternary ammonium salt at a terminal,
$R_5$ and $R_6$ are each independently selected from -H and a $C_1$-$C_3$ alkyl group, and
-* and -*' represent crosslinked bonding sites.

**2.** The copolymer for an anion exchange membrane according to claim 1, wherein in Formula 2-1, a is an integer of 2 to 5, and in Formula 2-2, b is an integer of 0 to 3.

**3.** The copolymer for an anion exchange membrane according to claim 1 or 2, wherein the divalent phenylene groups in Formulae 2-1 and 2-2 are each independently bonded at a meta- or para-position.

**4.** The copolymer for an anion exchange membrane according to any one of claims 1 to 3,

wherein the counterion of the quaternary ammonium salt is a halide anion, $OH^-$, $HCO_3^-$, or a mixture thereof, preferably wherein the counterion of the quaternary ammonium salt is selected from one or more of $F^-$, $Cl^-$, $Br^-$, and $I^-$.

**5.** The copolymer for an anion exchange membrane according to any one of claims 1 to 4, wherein $M_1$ is selected from the arylene groups represented by any one of Formulae 2-1A to 2-1E below:

[Formula 2-1A]

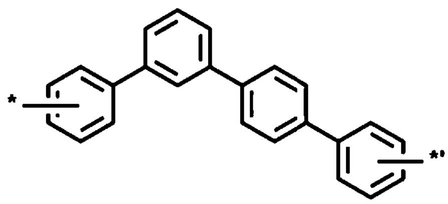

[Formula 2-1B]

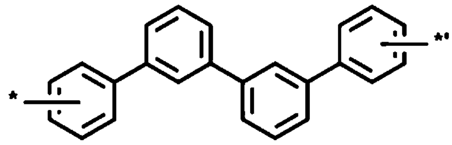

[Formula 2-1C]

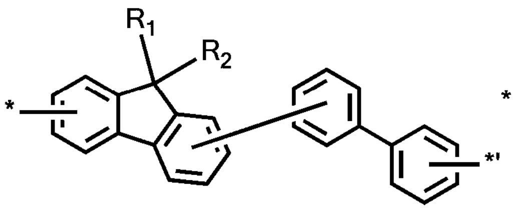

[Formula 2-1D]

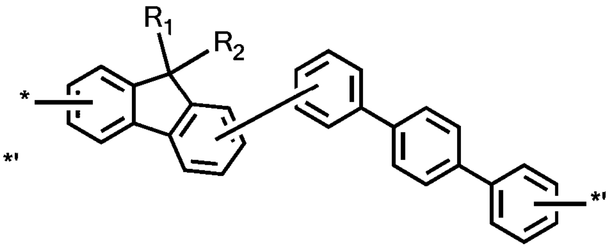

[Formula 2-1E]

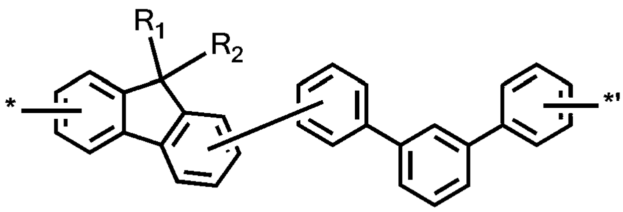

wherein in Formulae 2-1A to 2-1E, $R_1$ and $R_2$ are each independently a $C_1$-$C_{10}$ alkyl group, and -* and -*' represent crosslinked bonding sites,
preferably wherein in Formulae 2-1C to 2-1E, the arylene group derived from fluorene is bonded at the meta-position with respect to the adjacent phenylene group.

**6.** The copolymer for an anion exchange membrane according to any one of claims 1 to 5, wherein $R_1$ and $R_2$ are each independently a $C_1$-$C_5$ alkyl group.

**7.** The copolymer for an anion exchange membrane according to any one of claims 1 to 6, wherein $R_3$ and $R_4$ are each independently a $C_4$-$C_7$ alkyl group having a halide quaternary ammonium salt at a terminal.

**8.** The copolymer for an anion exchange membrane according to any one of claims 1 to 7, wherein the quaternary ammonium salt is selected from the group represented by Formulae 5-1 to 5-3 below:

[Formula 5-1] [Formula 5-2] [Formula 5-3]

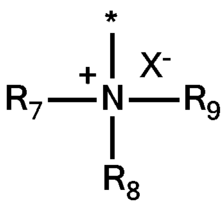

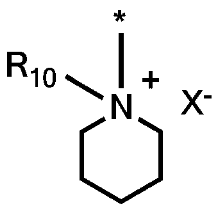

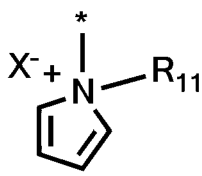

wherein in Formulae 5-1 to 5-3, $R_7$ to $R_{11}$ are each independently a $C_1$-$C_5$ alkyl group, each X is independently OH, F, Cl, Br, or I, and -* represents a bonding site bonded to the terminal of $R_3$ or $R_4$.

**9.** The copolymer for an anion exchange membrane according to any one of claims 1 to 8, wherein the copolymer further comprises a crosslinking unit represented by any one of Formulae 6-1 and 6-2 below:

[Formula 6-1]

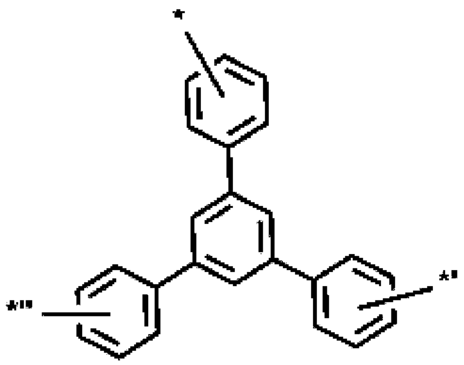

[Formula 6-2]

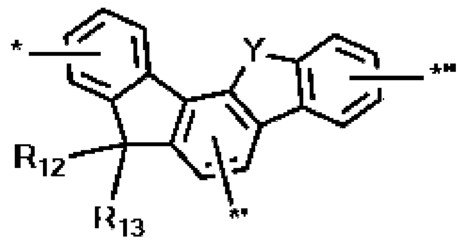

wherein in Formulae 6-1 and 6-2, -*, -*' and -*'' represent bonding sites crosslinked with the repeating unit, $R_{12}$ and $R_{13}$ are each independently a $C_1$-$C_5$ alkyl group, and Y is O or S.

**10.** The copolymer for an anion exchange membrane according to claim 9, wherein the repeating unit and the crosslinking unit are directly crosslinked or are crosslinked through an arylene group represented by any one of Formulae 7-1 and 7-2 below:

[Formula 7-1]

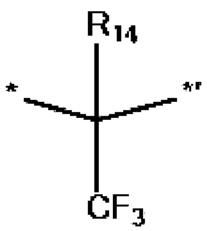

[Formula 7-2]

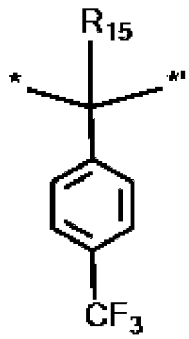

wherein in Formulae 7-1 and 7-2, $R_{14}$ and $R_{15}$ are each independently selected from -H and $C_1$-$C_3$ alkyl groups, and -* and -*' represent crosslinked bonding sites.

**11.** The copolymer for an anion exchange membrane according to any one of claims 1 to 10, wherein the copolymer comprises the repeating unit represented by Formula 1 in an amount of 90.0 mol% to 100 mol%, based on the total repeating units included in the copolymer.

**12.** The copolymer for an anion exchange membrane according to claim 9, wherein the copolymer comprises the repeating unit represented by Formula 1 in an amount of 80.0 mol% to 99.0 mol%, based on the total repeating units included in the copolymer, and comprises the crosslinking unit represented by any one of Formulae 6-1 and 6-2 in an amount of 1.0 mol% to 20.0 mol%, based on the total repeating units included in the copolymer.

**13.** The copolymer for an anion exchange membrane according to any one of claims 1 to 13, wherein the ionic conductivity reduction rate (R), calculated by Equation 1 below, is 15% or less:

[Equation 1]

$$\text{Ionic conductivity reduction rate (R, \%)} = ((C_1 - C_2) / C_1) \times 100$$

(in Equation 1, $C_1$ denotes the ionic conductivity evaluated at room temperature for an anion exchange membrane including the copolymer for an anion exchange membrane, after converting the counterion to $OH^-$, and $C_2$ denotes the ionic conductivity evaluated at room temperature after immersing the anion exchange membrane in the $OH^-$ form in a 1 M alkaline solution, maintaining it at 80°C for 28 days, and then cooling it to room temperature).

**14.** An anion exchange membrane comprising the copolymer according to any one of claims 1 to 13.

**15.** Use of an anion exchange membrane according to claim 14 for selective ion exchange in a fuel cell, a water electrolyser, and/or a carbon dioxide conversion device, particularly a carbon dioxide electrolyser.

Europäisches Patentamt
European Patent Office
Office européen des brevets

# EUROPEAN SEARCH REPORT

Application Number
EP 26 15 0206

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2023/049459 A1 (FFI IONIX IP INC [US]) 30 March 2023 (2023-03-30)<br>* paragraph [0001] - paragraph [0052]; claims 1-37; figures; examples *<br>----- | 1-15 | INV.<br>C08G61/12<br>C07D519/00<br>C08L65/00<br>C09K11/06<br>H10K30/00 |
| Y | US 2020/406248 A1 (BAHAR BAMDAD [US] ET AL) 31 December 2020 (2020-12-31)<br>* paragraph [0002] - paragraph [0031]; claims 1-21; figures; examples *<br>----- | 1-15 | |
| Y | CN 118 684 924 A (UNIV CHANGZHOU) 24 September 2024 (2024-09-24)<br>* paragraph [0001] - paragraph [0033]; claims 1-10; examples *<br>----- | 1-15 | |
| X | REN RONG ET AL: "Facile Preparation of an Ether-Free Anion Exchange Membrane with Pendant Cyclic Quaternary Ammonium Groups",<br>ACS APPLIED ENERGY MATERIALS,<br>vol. 2, no. 7, 17 June 2019 (2019-06-17), pages 4576-4581, XP093059469,<br>United States<br>ISSN: 2574-0962, DOI: 10.1021/acsaem.9b00674<br>* page 4576 - page 4581 *<br>----- | 1-15 | TECHNICAL FIELDS SEARCHED (IPC)<br>C08G<br>C09D<br>H10K<br>C07D<br>C08L<br>C09K |
| Y | LEE WOO-HYUNG ET AL: "Fluorene-Based Hydroxide Ion Conducting Polymers for Chemically Stable Anion Exchange Membrane Fuel Cells",<br>ACS MACRO LETTERS,<br>vol. 4, no. 4, 2 April 2015 (2015-04-02), pages 453-457, XP093059467,<br>United States<br>ISSN: 2161-1653, DOI: 10.1021/acsmacrolett.5b00145<br>* page 453 - page 457 *<br>-----<br>-/-- | 1-15 | |

The present search report has been drawn up for all claims

1

| Place of search | Date of completion of the search | Examiner |
|---|---|---|
| The Hague | 27 May 2026 | Kiebooms, Rafaël |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number
EP 26 15 0206

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| X | ALLUSHI ANDRIT ET AL: "Highly conductive hydroxide exchange membranes containing fluorene-units tethered with dual pairs of quaternary piperidinium cations", JOURNAL OF MEMBRANE SCIENCE ELSEVIER, AMSTERDAM, NL, vol. 632, 24 April 2021 (2021-04-24), XP086578942, ISSN: 0376-7388, DOI: 10.1016/J.MEMSCI.2021.119376 [retrieved on 2021-04-24] * page 119376 - page 119387 * ----- | 1-15 | |

TECHNICAL FIELDS SEARCHED (IPC)

The present search report has been drawn up for all claims

1

| Place of search | Date of completion of the search | Examiner |
| --- | --- | --- |
| The Hague | 27 May 2026 | Kiebooms, Rafaël |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 26 15 0206

This annex lists the patent family members relating to the patent documents cited in the above-mentioned European search report.
The members are as contained in the European Patent Office EDP file on
The European Patent Office is in no way liable for these particulars which are merely given for the purpose of information.

27-05-2026

| Patent document cited in search report | Publication date | Patent family member(s) | Publication date |
|---|---|---|---|
| WO 2023049459 A1 | 30-03-2023 | NONE | |
| US 2020406248 A1 | 31-12-2020 | US 2020406248 A1 | 31-12-2020 |
| | | US 2024342699 A1 | 17-10-2024 |
| CN 118684924 A | 24-09-2024 | NONE | |

EPO FORM P0459

For more details about this annex : see Official Journal of the European Patent Office, No. 12/82